(19) Europäisches Patentamt
European Patent Office
Office européen des brevets

(11) **EP 1 933 367 A1**

(12) **EUROPEAN PATENT APPLICATION**
published in accordance with Art. 153(4) EPC

(43) Date of publication:
**18.06.2008 Bulletin 2008/25**

(51) Int Cl.:
*H01J 65/00* (2006.01)    *H05B 41/24* (2006.01)

(21) Application number: **06798330.4**

(22) Date of filing: **26.09.2006**

(86) International application number:
**PCT/JP2006/319064**

(87) International publication number:
**WO 2007/037230 (05.04.2007 Gazette 2007/14)**

(84) Designated Contracting States:
**DE FR GB**

(30) Priority: **29.09.2005 JP 2005284304**

(71) Applicant: **MATSUSHITA ELECTRIC INDUSTRIAL CO., LTD.**
**Osaka 571-8501 (JP)**

(72) Inventors:
• **SHIMIZU, Nobuhiro,**
**c/o Matsushita Electric Industrial Co., Ltd.**
**2-1-61 Shiromi, Chuo-ku,**
**Osaka 540-6207 (JP)**

• **SHIGETA, Teruaki,**
**c/o Matsushita Electric Industrial Co., Ltd.**
**2-1-61 Shiromi, Chuo-ku,**
**Osaka 540-6207 (JP)**

(74) Representative: **Eisenführ, Speiser & Partner**
**Patentanwälte Rechtsanwälte**
**Postfach 10 60 78**
**28060 Bremen (DE)**

(54) **EXTERNAL ELECTRODE LAMP, BACKLIGHT UNIT, AND LIQUID CRYSTAL DISPLAY**

(57)    An external electrode lamp (2) includes a glass discharge container (4) having a discharge medium enclosed therein, and first and second external electrodes (6 and 8) provided external to the discharge container. Since the surface area of the first external electrode is larger than that of the second external electrode, the capacitance of a first capacitor constituted from the first external electrode and a first dielectric part including a portion of the discharge container between the first external electrode and the discharge medium is larger than that of a second capacitor constituted from the second external electrode and a portion of the discharge container between the second external electrode and the discharge medium. Consequently, when a high-voltage output of a lighting circuit is connected to the first external electrode, the second external electrode is grounded, and a voltage is applied, the voltage-to-ground at a portion of the inner wall of the discharge container that faces the first external electrode is higher than conventional, which facilitates starting discharges, thus improving the in-dark starting characteristic.

FIG.1

EP 1 933 367 A1

**Description**

**TECHNICAL FIELD**

The present invention relates to an external electrode lamp, a backlight unit, and a liquid crystal display device, and in particular to technology for improving an in-dark starting characteristic of the external electrode lamp.

**BACKGROUND ART**

One example of an external electrode lamp is an external electrode fluorescent lamp (EEFL: External Electrode Fluorescent Lamp). Similarly to cold cathode fluorescent lamps, EEFLs are more suited for reductions in diameter than hot cathode fluorescent lamps. EEFLs are therefore favorably used as light sources in backlight units for which a reduction in thickness (reduction in size) is demanded.
There are two main types of backlight units, namely an edge-light type in which a light guide plate is provided on a back face of an LCD panel and a fluorescent lamp is disposed on an edge surface of the light guide plate, and a direct type in which a plurality of fluorescent lamps are arranged parallel to the back face of the LCD panel. When the two types are compared, generally edge-light type backlight units can be said to be superior in terms of brightness uniformity of the light emitting face and reductions in thickness and disadvantageous in terms of increases in brightness, whereas direct type backlight units can be said to be superior in terms of increases in brightness and somewhat disadvantageous in terms of reductions in thickness.
For this reason, direct type backlight units are often employed in LCD apparatuses that are used in liquid crystal TVs in which an increase in brightness is emphasized.
When cold cathode fluorescent lamps are employed as a light source in a direct type backlight unit, a different high frequency lighting circuit (inverter) is required for each cold cathode fluorescent lamp, which leads to a rise in cost. In view of this, in recent years there has been active development of EEFLs in which an external electrode is provided on an outer circumference of each end of a tube-shaped glass container, the glass tube wall is used as a capacitance, and light is emitted by a dielectric barrier discharge (patent document 1). Given that the EEFL itself has a capacitance, a plurality of lamps can be lit by one inverter, thereby enabling a significant reduction in cost.
*Patent document 1: Japanese Patent Application Publication No.* S61-126559

**DISCLOSURE OF THE INVENTION**

**PROBLEMS SOLVED BY THE INVENTION**

However, EEFLs, which do not have an electron-generating electrode in the discharge space, have a poor in-dark starting characteristic. Specifically, the number of electrons required for starting is not sufficient in the dark, thereby incurring the risk of a starting failure. Due to the structure of general backlight units, EEFLs used therein are in an environment of scarce external light. This problem is therefore significant in EEFLs used in backlight units.
The voltage applied to the external electrodes may be increased in order to prevent starting failures. However, doing so incurs the risk that the difference in potential between the external electrodes and the glass container will exceed the dielectric breakdown voltage of air. As a result, a discharge would occur between the external electrodes and the glass container, thereby producing ozone which has a strong oxidizing property.
Note that the aforementioned in-dark starting characteristic problem is not limited to EEFLs. This problem is also shared by, for example, external electrode ultraviolet lamps that directly use only ultraviolet light and that are used for sterilization etc.
The present invention has been achieved in light of the above problem, and an aim thereof is to provide an external electrode lamp that can, compared to conventional technology, further suppress the voltage applied to an external electrode for discharge inception, a backlight unit including such external electrode lamp, and a liquid crystal display device including such backlight unit.

**MEANS TO SOLVE THE PROBLEMS**

In order to achieve the above aim, the present invention is an external electrode lamp including: a discharge container having a discharge medium enclosed therein; and a first external electrode and a second external electrode that have been provided external to the discharge container, wherein a capacitance of a first capacitor is greater than a capacitance of a second capacitor, the first capacitor being constituted from the first external electrode and a first dielectric part that includes a portion of the discharge container between the first external electrode and the discharge medium, and the second capacitor being constituted from the second external electrode and a second dielectric part that includes a portion of the discharge container between the second external electrode and the discharge medium.

In order to achieve the above aim, the present invention is also a backlight unit including: the above external electrode lamp; and a lighting circuit unit operable to apply an alternating voltage to the first external electrode and the second external electrode such that in at least a half cycle of the alternative voltage, a potential of the first external electrode is higher than a potential of the second external electrode.

In order to achieve the above aim, the present invention is also a liquid crystal display apparatus including: a liquid crystal display panel; and the backlight unit of claim 19, the backlight unit including an envelope that houses a plurality of the external electrode lamps, and the envelope having been provided on a back face of the liquid crystal display panel.

## EFFECTS OF THE INVENTION

According to the external electrode lamp of the present invention, since the capacitance of the first capacitor that includes the first external electrode is greater than the capacitance of the second capacitor that includes the second external electrode, if for example the high voltage output of a lighting circuit is connected to the first external electrode, and the other end of the lighting circuit is grounded and connected to the second external electrode, the voltage-to-ground at a portion of the inner wall of the discharge container that opposes the first external electrode is higher than a conventional external electrode lamp in which the capacitances of both capacitors are substantially equal. As a result, if the magnitude of the voltage applied to both external electrodes is the same, a discharge can be started more easily than in conventional technology, and the in-dark starting characteristic is improved. In other words, the voltage applied to the first and second external electrodes to start a discharge can be lower than in conventional technology.

## BRIEF DESCRIPTION OF THE DRAWINGS

Fig.1 is a half section view of an EEFL (External Electrode Fluorescent Lamp) pertaining to embodiment 1;
Figs.2A and 2B show an equivalent circuit of the EEFL;
Fig.3 shows potential curves (before discharge inception) in a tube axis direction of EEFLs;
Figs. 4A to 4C show results of a test regarding starting voltage and luminance uniformity in EEFLs;
Fig.5 is a half section view of an EEFL pertaining to embodiment 2;
Fig.6 is a half section view of an EEFL pertaining to embodiment 3;
Fig.7 is a half section view of an EEFL pertaining to embodiment 4;
Fig.8 is a half section view of an EEFL pertaining to embodiment 5;
Fig.9 is a half section view of an EEFL pertaining to embodiment 6;
Fig.10 is a half section view of an EEFL pertaining to embodiment 7;
Fig.11 is a half section view of an EEFL pertaining to embodiment 8;
Fig.12 is a perspective view showing the schematic structure of a backlight unit pertaining to embodiment 9;
Fig.13 is a block diagram of the backlight unit;
Fig.14 shows an exemplary removable structure of an EEFL in the backlight unit;
Fig.15 shows a modification of an arrangement of EEFLs in the backlight unit;
Fig.16 shows the schematic structure of a liquid crystal TV using the backlight unit of embodiment 9;
Figs.17A and 17B show an EEFL pertaining to embodiment 10;
Fig.18 is a detailed view of portion A in Fig.17B;
Fig.19 is a cross-sectional view of part of an EEFL pertaining to embodiment 11;
Fig.20 is a cross-sectional view of part of an EEFL pertaining to embodiment 12;
Fig.21 is a cross-sectional view of part of an EEFL pertaining to embodiment 13;
Figs.22A and 22B show an EEFL pertaining to embodiment 14; and
Fig.23 shows an exemplary external electrode.

## DESCRIPTION OF THE CHARACTERS

2, 20, 28, 36, 40, 44, 48, 52, 56, 100, 110, 120, 130, 140    EEFL

4, 26, 34, 118, 138, 142                                     glass container

| 6, 22, 30, 102, 112, 122, 146 | first external electrode |
| 8, 24, 32, 104, 148 | second external electrode |
| 38 | phosphor film |
| 42 | protective film |
| 46, 50, 54 | dielectric film |
| 56 | backlight unit |
| 76 | liquid crystal TV |
| 78 | liquid crystal display panel |

## BEST MODE FOR CARRYING OUT THE INVENTION

Embodiments of the present invention are described below with reference to the drawings.

Embodiment 1

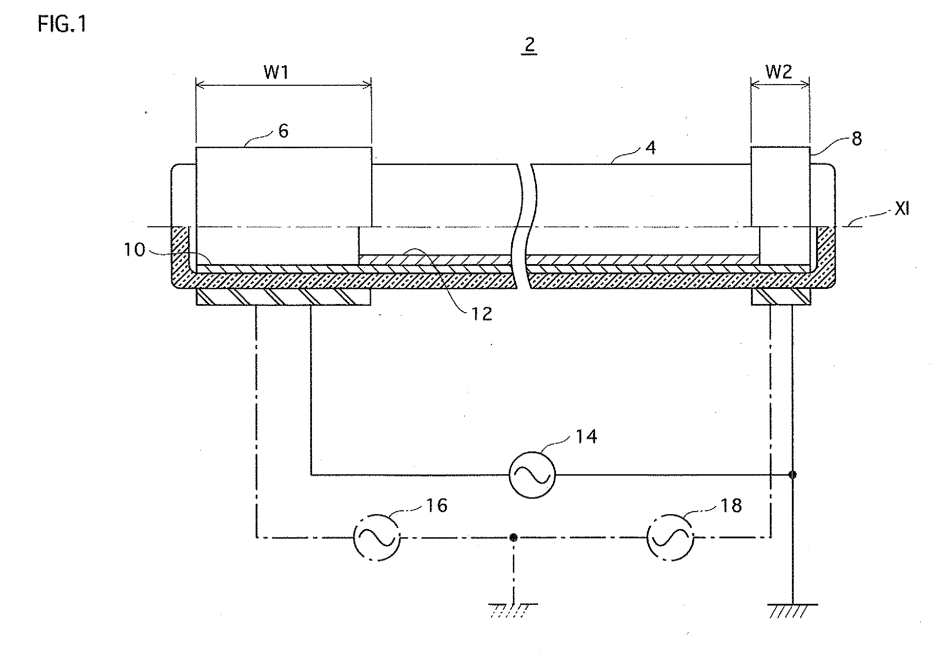

Fig.1 is a half section view showing the schematic structure etc. of an external electrode fluorescent lamp 2 (hereinafter, called simply "the fluorescent lamp 2") pertaining to embodiment 1. Note that the scale between constituent members is not uniform in Fig.1 or any of the drawings.

The fluorescent lamp 2 has a glass container 4, which is an example of a discharge container. The glass container 4 is a long and thin cylindrical glass tube whose ends have been hermitically sealed. The material of the glass container 4 is, for example, borosilicate glass, quartz glass, soda glass, or lead glass. Also, in a case of being used as a backlight light source in a liquid crystal display device, the glass container 4 has an outer diameter of approximately 1 to 20 mm, and the value of half the difference between the outer and internal diameters of the glass container 4, that is to say, the thickness of the glass container 4 is set to approximately 0.1 to 2 mm. Note that if one of the above-listed glass materials is selected, the glass container 4 (the selected glass material) has a relative permittivity in the range of 3 to 10.

A first external electrode 6 and a second external electrode 8 have been formed on the outer circumference of respective ends of the glass container 4. The first external electrode 6 has been formed so as to, over the width W1 thereof (the length W1 of the electrode in the tube axis X1 direction of the glass container 4), encompass the entire circumference of the glass container 4. Note that although not depicted in Fig.1, the first external electrode 6 has a two-layer structure. The layer closer to the glass container 4 is a silver (Ag) paste film, and the layer farther from the glass container 4 is a lead (Pb)-free solder film. Similarly, the second external electrode 8 has also been formed so as to, over the width W2 thereof (the length W2 of the electrode in the tube axis X1 direction of the glass container 4), encompass the entire circumference of the glass container 4, and the second external electrode 8 has a two-layer structure in which the layer closer to the glass container 4 is a silver (Ag) paste film, and the layer farther from the glass container 4 is a lead (Pb) -free solder film. Unlike conventional technology, the magnitude relationship between W1 and W2 is W1>W2, and the reason for this is described later. Note that first and second external electrodes 6 and 8 are not limited to being as described above, but instead may be formed by, for example, adhering a metal tape composed of copper, aluminum, or the like to the outer circumference of the glass container 4.

A protective film 10 has been formed on substantially an entirety of the inner circumferential surface of the glass container 4, including portions thereof that oppose the first and second external electrodes 6 and 8. The protective film 10 is made of an aggregation of metal oxide particles. Yttrium oxide ($Y_2O_3$), alumina ($Al_2O_3$), etc. can be used as the metal oxide.

A phosphor film 12 has been laminated on the inner side of the protective film 10. With respect to the longitudinal direction of the glass container 4 (tube axis X1 direction), the phosphor film 12 has been formed in a range from the first external electrode 6 to the second external electrode 8. Note that as shown in Fig.1, portions of the phosphor film 12 may be in portions of the inner circumferential surface of the glass container 4 that oppose the first and second external electrodes 6 and 8. The phosphor film 12 includes three types of rare-earth phosphors, namely red (R), green (G), and blue (B), and as a whole emits white light. The red, green and blue phosphors can be, for example, YOX ($Y_2O_3$:EU$^{3+}$), LAP ($LaPO_4$:Ce$^{3+}$,Tb$^{3+}$) and BAM ($BaMg_2Al_{16}O_{27}$:Eu$^{2+}$) respectively.

Also, a predetermined amount of mercury and a mixture of rare gases at a predetermined pressure have been enclosed in the glass container 4 as a discharge medium. The mixture of rare gases can be, for example, a neon-argon gas mixture.

In the fluorescent lamp 2 having the above structure, when a high-frequency voltage is applied to the first and second external electrodes 6 and 8 by a high frequency lighting circuit 14, a discharge phenomenon occurs in the hermitically sealed space (discharge space) in the glass container 4, thereby causing ultraviolet radiation to be emitted. The ultraviolet radiation is converted into visible light by the phosphor film 12 and emitted out of the glass container 4. In other words, when a high-frequency, high-voltage alternating voltage is applied to the first and second external electrodes 6 and 8, dielectric polarization occurs at portions of the glass container 4, which is a dielectric, that are directly below the first and second external electrodes 6 and 8, and the inner walls of these portions act as electrodes. Accordingly, a high voltage is introduced into the glass container 4, and a dielectric barrier discharge occurs therein. As such, in the dielectric barrier discharge, the electrodes are not directly exposed to plasma since the discharge space is surrounded by a dielectric (the glass container 4).

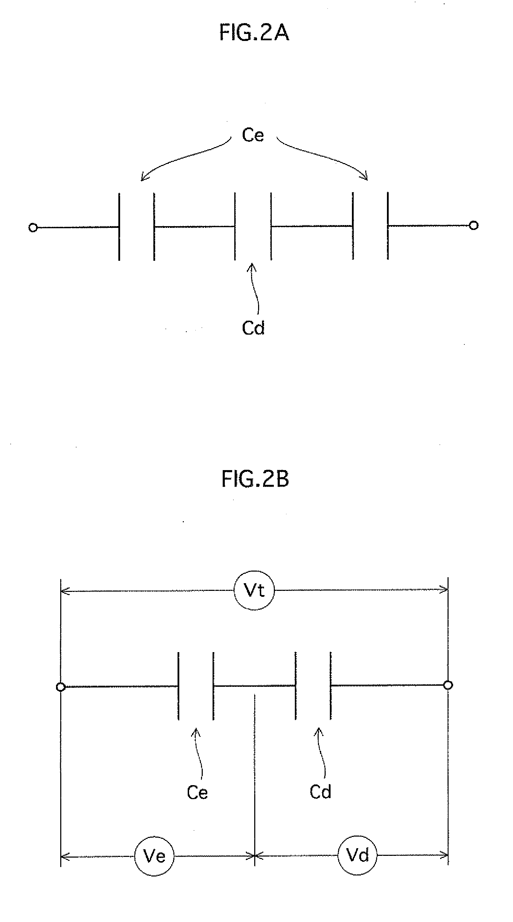

However, as mentioned above, EEFLs, which do not have an electron-generating electrode in the discharge space, have a poor in-dark starting characteristic. The following describes, with reference to Figs.2A and 2B, the process by which the inventors of the present invention arrived at a means (the present invention) for improving the in-dark starting characteristic without increasing the voltage applied to the external electrodes more than necessary.

Fig.2A shows an equivalent circuit of a conventional external electrode lamp. Note that the following describes an example of a conventional external electrode lamp in which a protective layer, a phosphor layer, etc. have not been formed on the inner wall of the glass container.

Generally, the status of an external electrode lamp before discharge inception can be shown by an equivalent circuit such as shown in Fig.2A. Specifically, the circuit is considered to be constituted from capacitors Ce formed between each external electrode and the corresponding portion of the glass container, and a capacitor Cd formed by the discharge medium, which are all connected in series. Note that the reference notations "Ce" and "Cd" used in Figs.2A and 2B are also used in the following description as quantifiers representing capacitances.

For the sake of clarity in the description, as shown in Fig.2B, the capacitors Ce at the external electrode portions are depicted collectively as one, and in the following expression, Ct is the overall capacitance of the external electrode lamp.

$$Ct = (Ce \times CD) / (Ce + Cd) \qquad \ldots (1)$$

Also, in the following relationship, Vt is the overall voltage applied to the external electrode lamp, Ve is the voltage applied to the capacitor Ce, and Vd is the voltage applied to the capacitor Cd (the discharge medium).

$$Vt = Ve + VD \qquad \ldots (2)$$

$$Vd = Vt \times \{Ce / (Ce + Cd)\} \qquad \ldots (3)$$

Expression (3) shows that in order to increase Vd to improve the in-dark starting characteristic without raising the voltage Vt, Cd can be reduced or Ce can be increased.

However, since Cd is in inverse proportion to the distance between the electrodes, reducing Cd requires increasing the distance between the electrodes, which brings about an increase in the discharge starting voltage.

In the following expression for obtaining Ce, De is the thickness of the glass container, εe is the relative permittivity of the glass container, and Se is the effective area of the external electrodes (the surface area of the portions of the external electrodes that face the discharge medium).

$$Ce = (εe \times Se) / 2De \qquad \ldots (4)$$

Therefore, although Ce can be increased if εe and Se are increased and De is decreased, increasing Ce more than necessary causes the discharge current during lighting of the lamp to rise, which invites an excessive rise in temperature and reduction in luminance efficiency.

In view of this, as a result of dedicated research, the inventors of the present invention found that, letting the first capacitor be the capacitor constituted from one of the external electrodes (the first external electrode) and the portion of the glass container between the first external electrode and the discharge medium, letting the second capacitor be the capacitor constituted from the other external electrode (the second external electrode) and the portion of the glass container between the second external electrode and the discharge medium, letting C1 be the capacitance of the first capacitor, and letting C2 be the capacitance of the second capacitor, whereas C1 and C2 are conventionally substantially equal (C1≈C2), the in-dark starting characteristic can be improved without increasing the overall voltage applied to the lamp, by setting C1 to be greater than C2 (C1>C2), connecting the first external electrode to the high tension side of the lighting circuit, and connecting the second external electrode to the ground (GND) side of the lighting circuit.

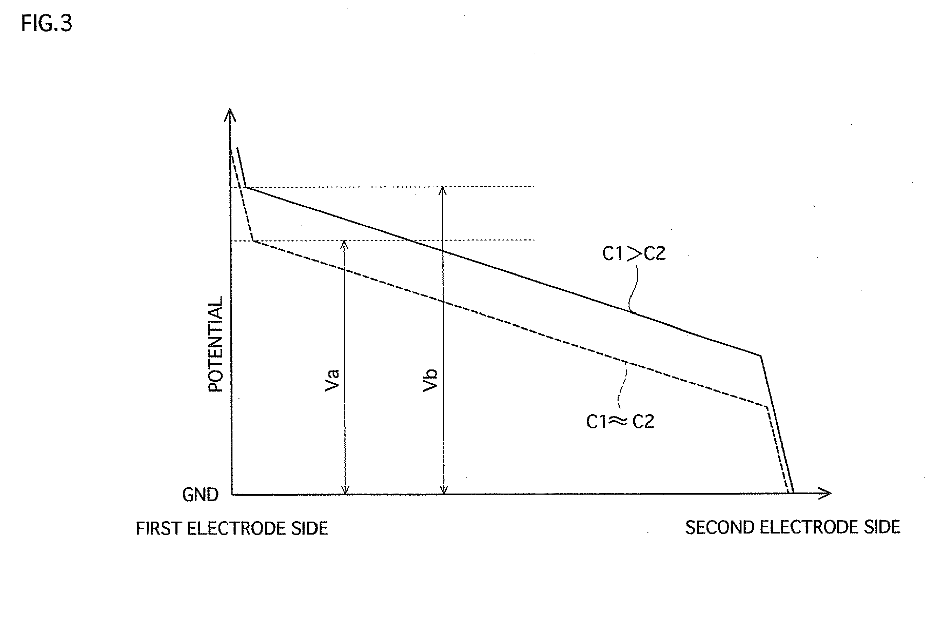

The following describes the above with reference to Fig.3.

Fig.3 shows potential curves, where the tube axis direction of the glass container is represented by the horizontal axis and the potential at the first external electrode, then the glass container, then the discharge medium, then the glass container, and finally the second external electrode in the tube axis direction is represented by the vertical axis. In Fig. 3, the dashed line shows the potential curve of the conventional external electrode lamp, and the solid line shows the potential curve of the external electrode lamp pertaining to the present invention.

When an external electrode lamp is mounted and used in the housing of a backlight unit, a capacitance forms between the glass container and the ground (GND) line, and between the glass container and an adjacent conductor such as the metal frame inside the backlight unit. Focusing now on one external electrode from the external electrode pair (here, the first external electrode), a higher potential-to-ground at a portion of the inner wall of the glass container opposing the first electrode is more advantageous to starting.

If the magnitude of the voltage applied to the first and second external electrodes is the same, setting the capacitance C1 to be greater than the capacitance C2 raises the potential-to-ground Vb at the inner wall of the glass container opposing the first external electrode of the external electrode lamp pertaining to the present embodiment over the potential-to-ground Va at the inner wall of the glass container opposing the first external electrode of the conventional external electrode lamp. The present invention therefore enables improving the in-dark starting characteristic without increasing the voltage applied to the external electrodes. In other words, the present invention enables obtaining the same in-dark starting characteristic as in conventional technology while using a lower discharge starting voltage (voltage applied to both external electrodes).

Here, the capacitance C1 is obtained in the following expression.

$$C1 = (\varepsilon 1 \times S1) / d1 \qquad \ldots (5)$$

$\varepsilon 1$: relative permittivity of the dielectric between the first external electrode and the discharge medium (here, the dielectric is only the glass container)
S1: effective area of the first external electrode (surface area of the portion facing the discharge medium)
d1: average thickness of the dielectric

The capacitance C2 is obtained in the following expression.

$$C2 = (\varepsilon 2 \times S2) / d2 \qquad \ldots (6)$$

$\varepsilon 2$: relative permittivity of the dielectric between the second external electrode and the discharge medium (here, the dielectric is only the glass container)
S2: effective area of the second external electrode (surface area of the portion facing the discharge medium)
d2: average thickness of the dielectric

Since generally $\varepsilon 1 = \varepsilon 2$, in order to realize C1>C2, based on expressions (5) and (6), S1 may be set to be greater than S2 (S1>S2), or d1 may be set to be less than d2 (d1<d2). Alternatively, these two may be combined (i.e., S1>S2 in addition to d1<d2).

In the fluorescent lamp 2 pertaining to the present embodiment shown in Fig.1, C1>C2 is realized by setting S1 to be greater than S2 (S1>S2), thereby improving the in-dark starting characteristic. Also, in the fluorescent lamp 2, S1 can be set to be greater than S2 (S1>S2) by merely changing the length of the external electrodes in the tube axis direction, which is advantageous in that common structures can be used for portions of the fluorescent lamp other than the external electrodes.

Note that in the fluorescent lamp 2 (see Fig.1), the dielectric between the discharge medium and the first and second external electrodes 6 and 8 includes not only the glass container 4, but also the protective film 10. In other words, in addition to the glass container 4, the protective film 10 is a constituent element of the first and second capacitors. Here, a first dielectric part is defined as a portion of the dielectric that lies between the first external electrode and the discharge medium and includes at least a portion of the glass container 4, and a second dielectric part is defined as a portion of the dielectric that lies between the second external electrode and the discharge medium and includes at least a portion of the glass container 4. Under the above two definitions, d1 is the average thickness of the first dielectric part, and d2 is the average thickness of the second dielectric part.

The inventors of the present invention examined variations in the difference between the values of C1 and C2 in conventional external electrode lamps that occur due to manufacturing reasons. Main causes of such variations are thought to be variations in the thickness of the glass container, and variations in the lengths of the external electrodes in the tube axis direction (in the present examination, simply called "electrode length").
First, ten test external electrode lamps each having an overall length of 880 mm were provided to examine variations in the thickness of the glass container at sites corresponding to the external electrodes. Note that the design value of the inner diameter a and outer diameter b of the glass container in the test lamps was 2.90 mm and 4.00 mm respectively.

The capacitance C of the capacitor constituted at one external electrode portion is expressed as follows.

$$C = 2\pi\varepsilon_0 L / \{\ln(b/a)\} \ldots (7)$$

Based on expression (7), the ratio of the capacitances at the external electrode portions is $\ln(b/a)$ if the electrode lengths L are the same.

For each test lamp, the inner and outer diameters a and b of the glass container were measured at both ends, and $\ln(b/a)$ was calculated for each end using the measured values. The smaller of the two resulting calculated values was divided by the larger calculated value to obtain the capacitance ratio (percentage). The average value AVG of the ten obtained capacitance ratios was 98.9%, where $3\sigma = 2.75\%$. Therefore, the variation in the capacitance ratio attributable to the thickness of the glass container is between 100% and 96.1% (=AVG-3$\sigma$).

Also, when the external electrodes are formed by screen printing, the tolerance for the electrode length L is approximately $\pm 0.1$ m. Therefore, when the design value of the electrode length L is 20 mm, the variation in the capacitance ratio attributable to variations in electrode length is at most 99.0% (=20.1/19.9).
When both the thickness of the glass container and electrode length are taken into consideration, the variation in the capacitance ratio is between 100% and 95.1% (=96.1×99.0).

In other words, even in conventional external electrode lamps, there are cases in which C1 is greater than C2 within the range of 100>C2/C1≥95.1%.
In view of this, the value of C2/C1 of the external electrode lamp pertaining to the present embodiment is preferably less than or equal to 95.0%. Setting such a range enables reducing the discharge starting voltage lower than in conventional external electrode lamps. In other words, in the present embodiment, setting C1 to be greater than C2 means creating a larger difference between C1 and C2 than in the case of an external electrode lamp obtained by normal manufacturing in which C1 and C2 are to be equal.

The lower the value of C2/C1 is set, that is to say, the greater C1 is over C2, the lower the discharge starting voltage is, thereby enabling an improvement in the in-dark starting characteristic. However, as the value of C2/C1 is reduced, that is to say, as the difference between C1 and C2 increases, the brightness gradually changes in the tube axis direction of the EEFL, that is to say, there is the phenomenon in which the degree of luminance imbalance increases. In other words, in the case of the present example, the brightness decreases from the first capacitor side which has the larger capacitance C1 to the second capacitor side which has the smaller capacitance C2.

In view of this, the inventors of the present invention performed a test to examine the degree of luminance imbalance when changing the value of C2/C1, as well as the starting voltage reduction effect.
The EEFLs provided for the test (hereinafter, called "test lamps") had basically the same structure as the fluorescent lamp 2 pertaining to embodiment 1 shown in Fig.1, with the exception of not including the protective film 10 (Fig.1). For the sake of clarity, the reference notations of Fig.1 are used in the following description of the test lamps.

The specifications of the test lamps were specifically as follows.
The glass container 4 was made of borosilicate glass. The glass container 4 had an overall length of 880 mm, an outer diameter of 3.0 mm, and an inner diameter of 2.0 mm.
YOX, LAP, and BAM were used as the red, green, and blue phosphors constituting the phosphor film 12, and the phosphors emitted white light overall.

Mercury and a mixture of rare gases were enclosed in the glass container 4. The rare gas mixture was made of 95% neon and 5% argon, and enclosed at a pressure of 8 kPa.

The first and second external electrodes 6 and 8 were both formed by wrapping copper tape (CU-35C made by 3M, Inc.) around the entire circumference of the glass container 4. Here, in order to obtain test lamps having different values for C2/C1, four test lamps A, B, C, and D were manufactured, each having a different combination of sizes for the width W1 of the first external electrode 6 and the width W2 of the second external electrode 8.

Note that in order to ensure reliability, external electrodes are normally constituted from a silver (Ag) paste film and a lead (Pb) -free solder film as previously described. However, using copper tape was not a problem in the present examination of initial characterization where C2/C1 is the parameter, and therefore copper tape was used in order to simplify the experiment. What was important was for the same external electrode material to be used for the first and second external electrodes 6 and 8.

Test lamp A (C2/C1=100%): W1=30 mm, W2=30 mm
Test lamp B (C2/C1= 71%): W1=35 mm, W2=25 mm
Test lamp C (C2/C1= 50%): W1=40 mm, W2=20 mm
Test lamp D (C2/C1= 10%): W1=50 mm, W2=10 mm
As described above, since the glass containers 4 of the above test lamps are long, the two lighting circuits 16 and 18 shown by dashed-dotted lines in Fig.1 were used, and were connected to the external electrodes 6 and 8 as shown in the same figure. The voltages of the two lighting circuits 16 and 18 had the same amplitude and same frequency (60 kHz). Also, since the voltage waveform was a sine wave, and the phase difference between the lighting circuits 16 and 18 was set to 180°, the difference in potential between the first and second external electrodes 6 and 8 was twice that of a case in which only one of the same type of lighting circuit is used (a case such as shown by the solid line), and the voltage applied to the glass container 4 can be raised without raising the potential-to-ground. Even in such a circuit structure, the first external electrode 6 has a higher potential than the second external electrode 8 in a half cycle of the high-frequency alternating voltage applied to first and second external electrodes 6 and 8, thereby obtaining the discharge voltage reduction effect for the same reasons as described using Fig.3.

When measuring the starting voltage, the four test lamps A, B, C, and D were covered by a blackout curtain to obtain a lighting intensity of 0.1 lux or less under the cloth.
To measure the starting voltage, an oscilloscope (WavePro 7200, made by LeCroy Corp.) was used, and a 1,000:1 high-voltage probe (P6015A, made by Tektronix, Inc.) was connected to the oscilloscope.

Also, the degree of luminance imbalance was measured with the use of a luminance meter (BM8, made by Topcon Technohouse Corp.) by measuring the brightness at the five sites of, in the tube axis direction, 147 mm, 293 mm, 440 mm, 587 mm, and 733 mm from the end of the glass container 4 corresponding to the first external electrode 6. For each of the test lamps, the smallest of the measured brightness values was divided by the largest of the measured brightness values (smallest value/largest value), and the calculated value was used as an indicator of the degree of luminance imbalance (luminance uniformity). The smaller the value of the luminance uniformity (%), the greater the degree of luminance imbalance, whereas the greater the value of the luminance uniformity, the smaller the degree of luminance imbalance.

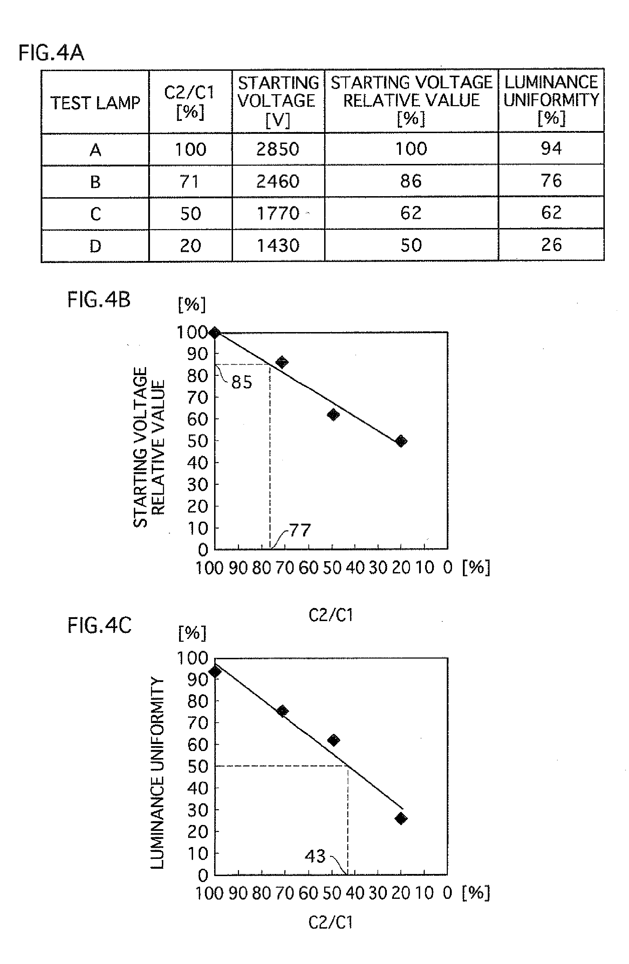

Fig. 4A shows the results of the test. Note that the measurement results are average values of ten measurements for each test lamp.
In Fig.4A, the starting voltage relative value column shows the measured starting voltage values of the test lamps B, C, and D (corresponding to the working example lamps) as a percentage of the measured starting voltage value of the test lamp A (corresponding to the conventional lamp), which had been set to 100.

Using the values of Fig.4A, Fig.4B shows a graph plotting the change in starting voltage relative value against C2/C1, and Fig.4C shows a graph plotting the change in luminance uniformity against C2/C1.
Fig.4B shows that as the value of C2/C1 decreases, the starting voltage is reduced, and the in-dark starting characteristic improves. Fig.4C shows that as the value of C2/C1 decreases, the luminance uniformity decreases (i.e., the degree of luminance imbalance increases).

Based on the above results, it is preferable for C2/C1 to be no more than 95% and no less than 43%.
The upper limit is 95% since, as previously described, setting the ratio of C1 and C2 in this way enables reducing the discharge starting voltage at least lower than in conventional external electrode lamps.
The lower limit is set to 43% for the following reason. Specifically, a luminance uniformity of 50% or higher is normally required when using the fluorescent lamp of the present embodiment as the light source in the backlight unit of a liquid crystal display device. Here, the luminance uniformity is 50% when C2/C1=43%, and therefore a luminance uniformity of 50% or greater can be maintained as long as C2/C1 is 43% or greater.

Furthermore, it is preferable for C2/C1 to be no more than 77%. Although the discharge starting voltage can be reduced lower than conventionally possible when C2/C1 is 95% or less, it is preferable for at least the starting voltage relative value to be 85% or less when actual use in a liquid crystal display device or the like is taken into consideration.

Embodiment 2

In embodiment 1, the width W1 of the first external electrode 6 is set to be greater the width W2 of the second external electrode 8, thereby giving the first external electrode 6 a larger effective area than the second external electrode 8 and making C1 greater than C2 (see Fig.1).

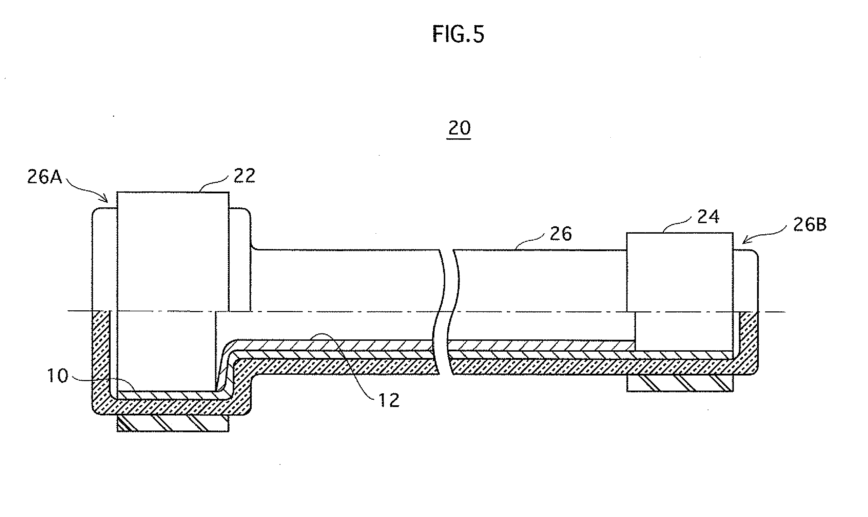

In contrast, in an external electrode fluorescent lamp 20 (hereinafter, called the "fluorescent lamp 20") pertaining to embodiment 2 and shown in Fig.5, the width of external electrodes 22 and 24 has been made the same, and the diameter (circumference) of a glass container portion 26B on which the second external electrode 24 is provided has been set wider than (longer than) the diameter (circumference) of a glass container portion 26A on which the first external electrode 22 is provided, thereby giving the first external electrode 22 a greater effective area than the second external electrode 24.

Accordingly, provided that the light-emitting lengths in the tube axis direction of the fluorescent lamps are equal, the overall length of the fluorescent lamp of the present embodiment can be made shorter than the fluorescent lamp of embodiment 1. In other words, provided that the overall lengths of the fluorescent lamps are equal, the light-emitting length of the fluorescent lamp of the present embodiment can be made longer than (the light-emitting area can be increased more than) the fluorescent lamp of embodiment 1.

Note that in the fluorescent lamp 20 shown in Fig.5, constituent elements that are substantially the same as in the fluorescent lamp 2 of embodiment 1 have been given the same reference notations, and descriptions thereof have been omitted.

Embodiment 3

In embodiments 1 and 2, C1 is set to be greater than C2 by giving the first external electrode a greater effective area than the second external electrode.

In Contrast, in the EEFLs of this and subsequent embodiments, C1 is set to be relatively greater than C2 by setting the average thickness d1 of the first dielectric part in the first capacitor that includes the first external electrode to be relatively smaller than the average thickness d2 of the second dielectric part in the second capacitor that includes the second external electrode.

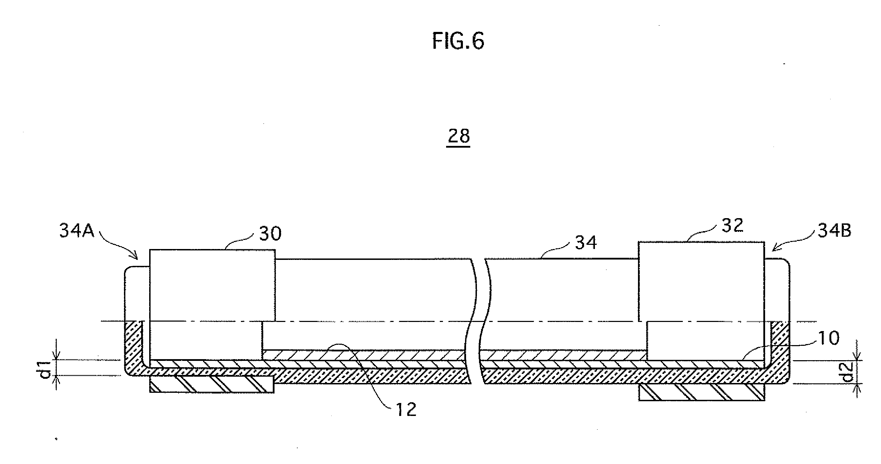

In an external electrode fluorescent lamp 28 (hereinafter, called the "fluorescent lamp 28") pertaining to embodiment 3 and shown in Fig.6, d1 is set to be less than d2 by making the thickness of a glass container portion 34A on which a first external electrode 30 is provided thinner than a glass container portion 34B on which a second external electrode 32 is provided. Specifically, whereas the internal diameter across the entire length of a glass container 34 is substantially uniform, the external diameter of the glass container portion 34A on which the first external electrode 30 is provided has been made smaller. Note that in the fluorescent lamp 28, constituent elements that are substantially the same as in the fluorescent lamp 2 of embodiment 1 have been given the same reference notations, and descriptions thereof have been omitted.

The above structure enables a reduction in cost without making large changes to the manufacturing process. The inventors of the present invention made a working example of the fluorescent lamp 28 pertaining to embodiment 3 and measured the starting voltage. Here, the working example lamp had the same structure as the aforementioned test lamp A, with the exception of a different external diameter of the glass container portion 34A on which the first external electrode 30 is provided. In the working example lamp, the external diameter of the glass container portion 34 on which the first external electrode 30 is provided is 2.4 mm.

The measuring tools, environment for measuring the starting voltage, and the like were the same as in the previously described test. The measurement results showed that the starting voltage of the working example lamp pertaining to embodiment 3 was 2140 [V]. In other words, the starting voltage of the working example lamp was verified to be lower than the 2850 [V] starting voltage of the test lamp A (see Fig.4A) that corresponds to a conventional lamp.

Embodiment 4

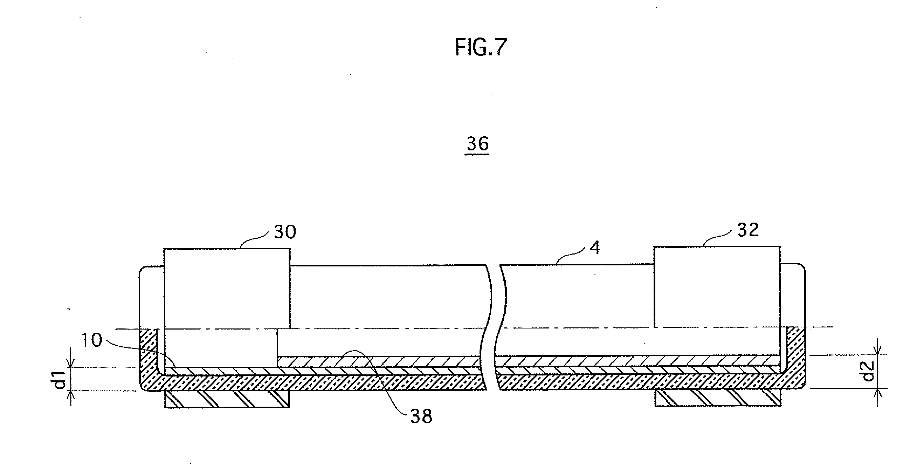

In an external electrode fluorescent lamp 36 (hereinafter, called the "fluorescent lamp 36") pertaining to embodiment 4 and shown in Fig.7, d2 is set to be greater than d1 by extending a fluorescent film 38 toward the second external electrode 32 side. The relative permittivity of the fluorescent film 38 is 3, and the relative permittivity of the glass container 4 is 5. In other words, since the relative permittivity of the fluorescent film 38 is the same as or lower than that of the glass container, increasing d2 enables setting C2 to be less than C1.

According to this structure, the outward form of the lamp is symmetrical, which enables use thereof in the housing of a conventional backlight unit.

Note that in the fluorescent lamp 36, constituent elements that are substantially the same as any of the fluorescent lamps of the above embodiments have been given the same reference notations, and descriptions thereof have been omitted.

Embodiment 5

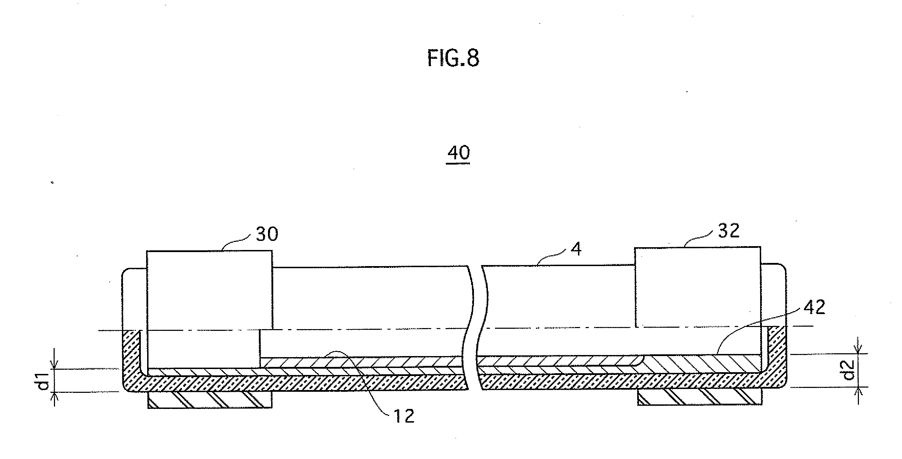

In an external electrode fluorescent lamp 40 (hereinafter, called the "fluorescent lamp 40") pertaining to embodiment 5 and shown in Fig.8, d2 is set to be greater than d1 and C2 is set to be less than C1, by making the thickness of a protective film 42 in a portion facing the second external electrode 32 greater than the thickness of the protective film 42 in a portion facing the first external electrode 30.

This structure enables a greater cost reduction than embodiment 4 since the protective film material is normally more inexpensive than the phosphor material.

Note that in the fluorescent lamp 40, constituent elements that are substantially the same as any of the fluorescent lamps of the above embodiments have been given the same reference notations, and descriptions thereof have been omitted.

Embodiment 6

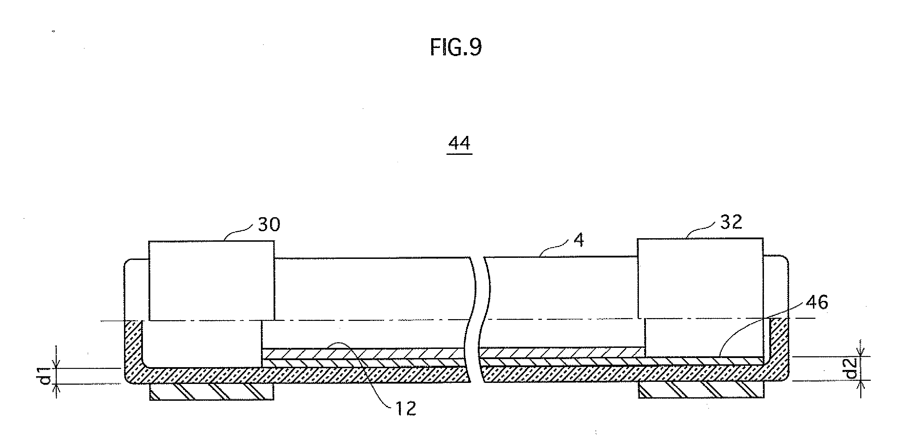

In an external electrode fluorescent lamp 44 (hereinafter, called the "fluorescent lamp 44") pertaining to embodiment 6 and shown in Fig. 9, a dielectric film 46 has been provided between the phosphor film 12 and the inner wall of the glass container 4.

The dielectric material forming the dielectric film 46 can be, for example, titanium oxide microparticles (relative permittivity: 100). Using such a material gives the dielectric film 46 the characteristics of transmitting visible light and absorbing ultraviolet light. This prevents, as much as possible, ultraviolet light from being emitted out of the glass container 4, thereby preventing the degradation of members in the vicinity of the fluorescent lamp 44 in the device in which it is mounted.

In the fluorescent lamp 44, d2 is set to be greater than d1 by extending the dielectric film 46 toward the second external electrode 32. As described above, since the relative permittivity of the dielectric film 46 is the same as or less than that of the glass container, increasing d2 enables setting C2 to be less than C1.

Also, the dielectric material forming the dielectric film 46 may be, for example, aluminum oxide microparticles (relative permittivity: 8.5). Using such a material gives the dielectric film 46 the characteristics of transmitting visible light and reflecting ultraviolet light. As a result, rather than being absorbed by the glass container, the ultraviolet light is efficiently converted into visible light by the phosphor film 12, thereby improving the brightness of the emitted visible light.

Note that in the fluorescent lamp 44, constituent elements that are substantially the same as any of the fluorescent lamps of the above embodiments have been given the same reference notations, and descriptions thereof have been omitted.

Embodiment 7

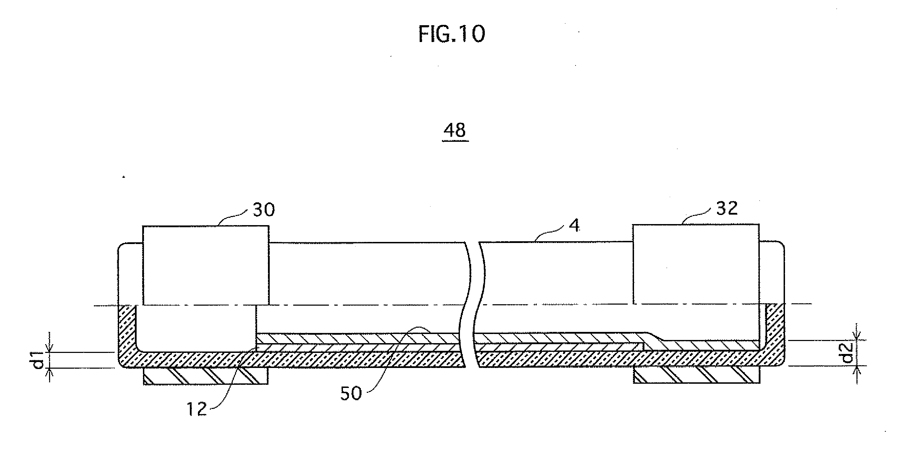

In an external electrode fluorescent lamp 48 (hereinafter, called the "fluorescent lamp 48") pertaining to embodiment 7 and shown in Fig.10, a dielectric film 50 has been provided between the phosphor film 12 and the discharge medium (not depicted).

The dielectric material forming the dielectric film 50 can be, for example, silica glass (relative permittivity: 3). Using such a material gives the dielectric film 50 the characteristics of transmitting visible light and ultraviolet light, and protecting the phosphor film 12 from plasma. This prevents, as much as possible, the degradation of the phosphor film 12 due to exposure to discharge plasma.

In the fluorescent lamp 48, d2 is set to be greater than d1 by extending the dielectric film 50 toward the second external electrode 32. As described above, since the relative permittivity of the dielectric film 50 is the same as or less than that of the glass container, increasing d2 enables setting C2 to be less than C1.

Note that in the fluorescent lamp 48, constituent elements that are substantially the same as any of the fluorescent lamps of the above embodiments have been given the same reference notations, and descriptions thereof have been omitted.

Embodiment 8

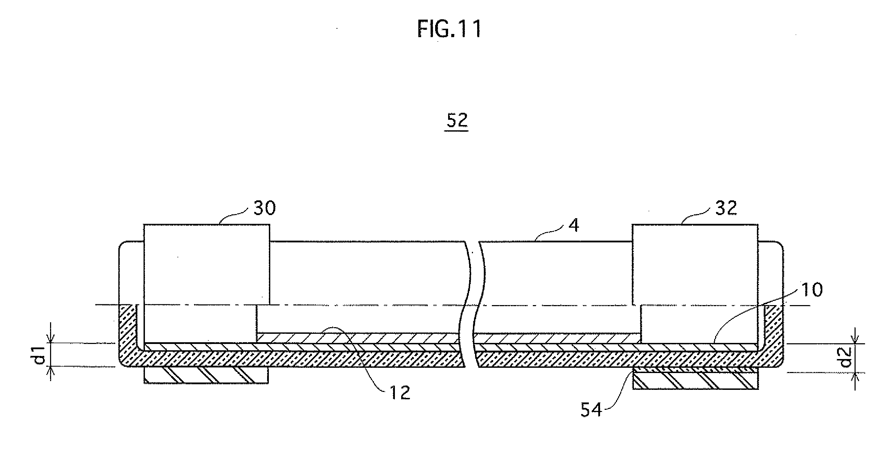

In an external electrode fluorescent lamp 52 (hereinafter, called the "fluorescent lamp 52") pertaining to embodiment 8 and shown in Fig.11, a dielectric film 54 has been provided between the second external electrode 32 and the outer circumference of the glass container 4, thereby making d2 greater than d1. The material forming the dielectric film 54 can be a glass paste made of a dielectric paste (made by Asahi Glass Co.) (relative permittivity: 8 to 12).

This enables freely changing the value of C2/C1 since the thickness and material of the dielectric paste can be changed easily.

Note that in the fluorescent lamp 52, constituent elements that are substantially the same as any of the fluorescent lamps of the above embodiments have been given the same reference notations, and descriptions thereof have been omitted.

Embodiment 9

The following describes an example of using any of the fluorescent lamps pertaining to the above embodiments as a light source in a backlight unit. Although any fluorescent lamp from embodiments 1 to 8 or the later-described embodiments 10 to 14 may be used, the following describes a case of using the fluorescent lamp 2 (see Fig.1) of embodiment 1.

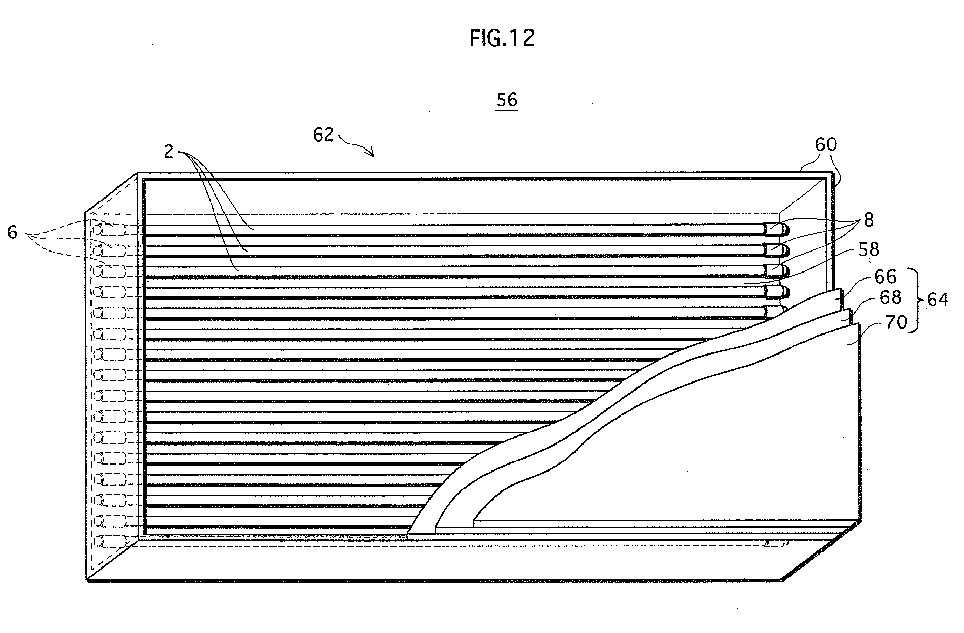

Fig.12 is a perspective view showing a schematic structure of a direct-type backlight unit 56. Note that the later-described light-focusing plate 64 is shown with a piece broken away in Fig.12. The backlight unit 56 has been disposed on the back face of an LCD (liquid crystal display) panel (not depicted in Fig.12), and is a constituent element of an LCD apparatus.

The backlight unit 56 has an envelope 62 that is made of a rectangular reflecting plate 58, side plates 60 encompassing the reflecting plate 58, and the light-focusing plate 46 that is provided parallel to the reflecting plate 58. The reflecting plate 58 and the side walls 60 are each formed from a plate material made of PET (polyethylene terephthalate) resin, and a reflecting film (not depicted) has been formed on one of the main surfaces of each plate (the surface facing inward when assembled as the envelope 62) by vapor depositing silver or the like. Note that the reflecting plate 58 and the side walls 60 can be constituted from, for example, a metal material such as aluminum or cold rolling material (e.g., SPCC). The reflecting film may be formed by adding calcium carbonate, titanium dioxide, or the like to PET resin. Doing so further raises the rate of reflectivity.

The light-focusing plate 64 is formed by laminating a diffusion plate 66, a diffusion sheet 68, and a lens sheet 70 in the stated order, beginning from the reflecting plate 58 side. The diffusion plate 66 is a plate-shaped material made of polymethyl methacrylate (PMMA) resin, and is disposed so as to block the opening of the housing. The diffusion sheet 68 is made of, for example, polyester resin. The lens sheet 70 is made by, for example, laminating an acrylic resin and a polyester resin.

The envelope 62 internally stores a plurality (in the present example, 16) of the fluorescent lamps 2 that have been disposed parallel with the long edge of the reflecting plate 58, with equal intervals therebetween in the short edge direction. Also, the fluorescent lamps 2 are electrically connected in parallel by wiring members not depicted in Fig.12. Note that taking the aforementioned luminance imbalance into consideration, the fluorescent lamp 2 may be disposed such that in a pair of adjacent fluorescent lamps 2, the first and second external electrodes 6 and 8 of one lamp in the pair are in the opposite direction of the first and second external electrodes 6 and 8 of the other fluorescent lamp in the pair. Doing so improves the overall luminance uniformity of the backlight unit 56.

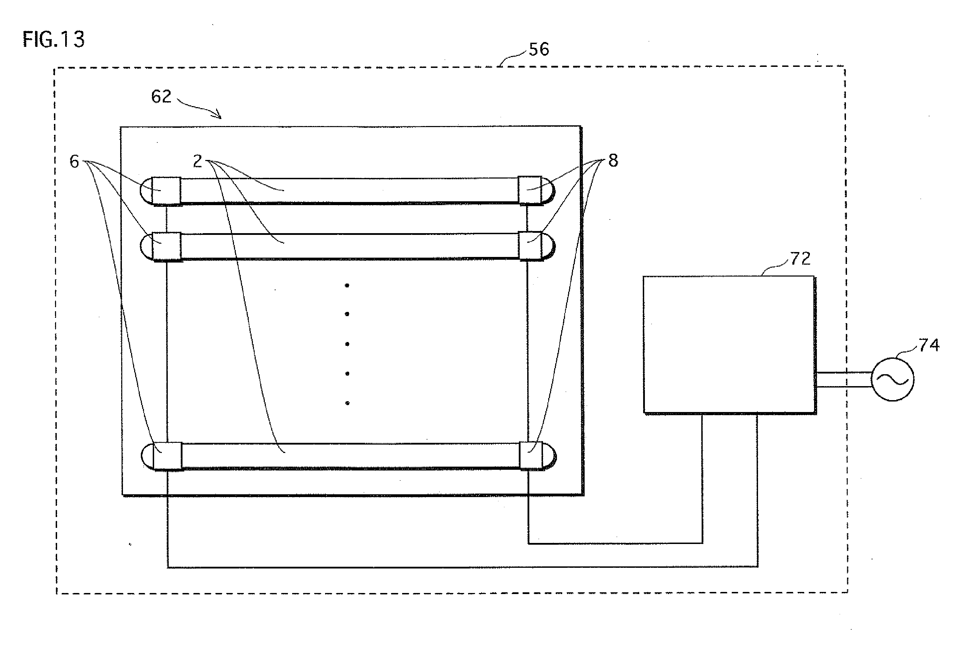

Fig.13 is a block diagram showing the backlight unit 56 along with an inverter 72 which is a lighting circuit unit for lighting 16 of the fluorescent lamps 2.

The inverter 72 converts a 50/60 Hz alternating current from a commercial power supply 74 into a high-frequency current (e.g., 60 kHz as previously mentioned), and supplies the converted current to the fluorescent lamps 2. Note that it goes without saying that the first external electrodes 6 are connected to the high-tension side of the inverter 72, and the second external electrodes 8 are connected to the ground side.

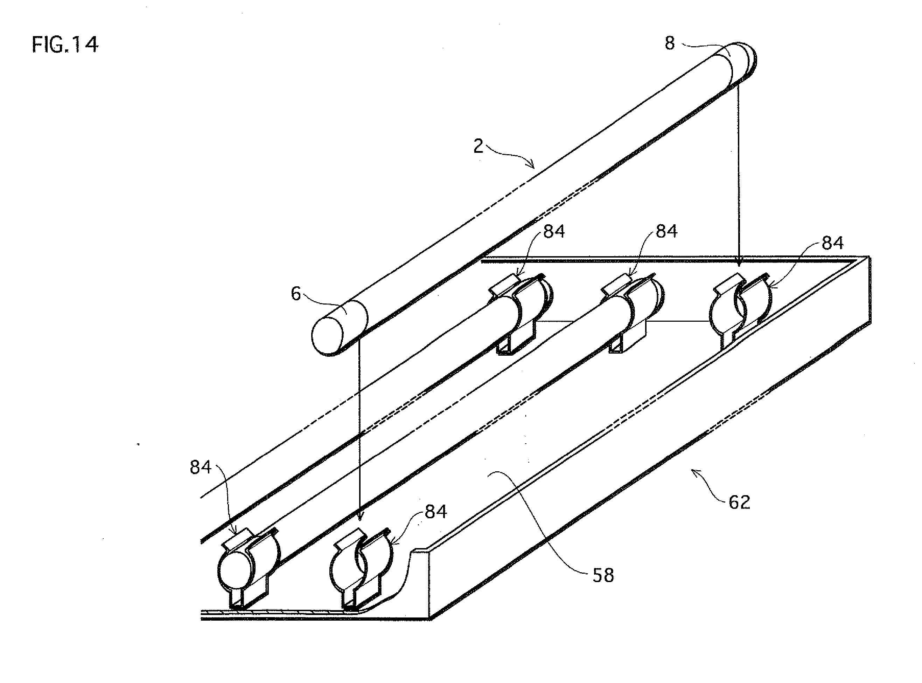

The following describes a structure in which the fluorescent lamps 2 have been mounted in the envelope 62 in the backlight unit with reference to Fig.14. The envelope 62 shown in Fig.14 is the same as the envelope in the backlight unit 56 shown in Fig.12, where Fig.14 shows details of the mounted structure of the fluorescent lamps.

Connectors 84, which are formed from springy metal plates that have been curved, have been set upright on the surface of the reflecting plate 58. The fluorescent lamps 2 are mounted to the envelope 62 by fitting the first and second external electrodes 6 and 8 at the ends of the lamps into the corresponding connectors 84. The provision of such connectors 84 enables the fluorescent lamps 2 to be freely removed from the envelope 62 (from the connectors 84).

In conventional backlight units, light emitted from the light-focusing plate is generally brightest at the central portion in the longitudinal direction of the fluorescent lamp, and gradually decreases in brightness toward the ends. In other words, the brightness of the light-focusing plate surface is uneven.

In the fluorescent lamp 2 of the above embodiment, there is the previously-described luminance imbalance in which the brightness gradually decreases from the first external electrode 6 toward the second external electrode 8 (or to put it the other way around, the brightness gradually increases from the second external electrode 8 toward the first external electrode 6). In view of this, the unevenness in the brightness of the light-focusing plate surface can be mitigated with use of the luminance imbalance of the fluorescent lamp 2.

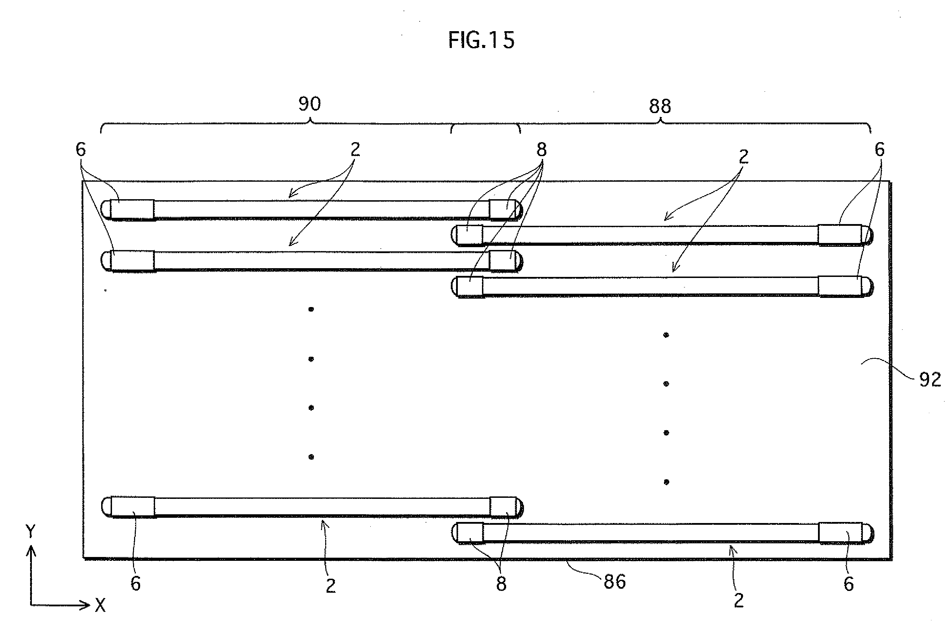

Specifically, arranging the fluorescent lamps 2 (of embodiment 1) in the envelope 86 as shown in Fig.15 enables mitigating the unevenness in the brightness of the light-focusing plate surface. As shown in Fig.15, the fluorescent lamps 2 are arranged in two rows, one on the left and one on the right (in the X axis direction). The fluorescent lamps 2 in the right row indicated by "88" are arranged such that the first external electrodes 6 are on the right side (the right end side of the reflecting plate 92) and the second external electrodes 8 are on the left side (in the central portion of the reflecting plate 92), whereas the fluorescent lamps 2 in the left row indicated by "90" are arranged such that the first external electrodes 6 are on the left side (the left end side of the reflecting plate 92) and the second external electrodes 8 are on the right side (the central portion of the reflecting plate 92).

When arranging the fluorescent lamps 2 such as in Fig. 15, C2/C1 is preferably no more than 95% and no less than 70%.

As previously mentioned, setting 95% as the upper limit enables reducing the discharge starting voltage more than in a conventional external electrode lamp.

The lower limit is set to 70% for the following reason. Regardless of whether the above lamp arrangement is used, if C2/C1 falls below 70%, the ends of the light-focusing plate in the longitudinal direction (horizontal direction) of the fluorescent lamps will be brighter than the central portion of the light-focusing plate. In other words, the brightness distribution of the backlight unit would revert to being imbalanced as in conventional technology, which causes users a sense of discomfort.

The following describes an example in which the backlight unit 56 is used in a liquid crystal TV, which is one example of a liquid crystal display apparatus.

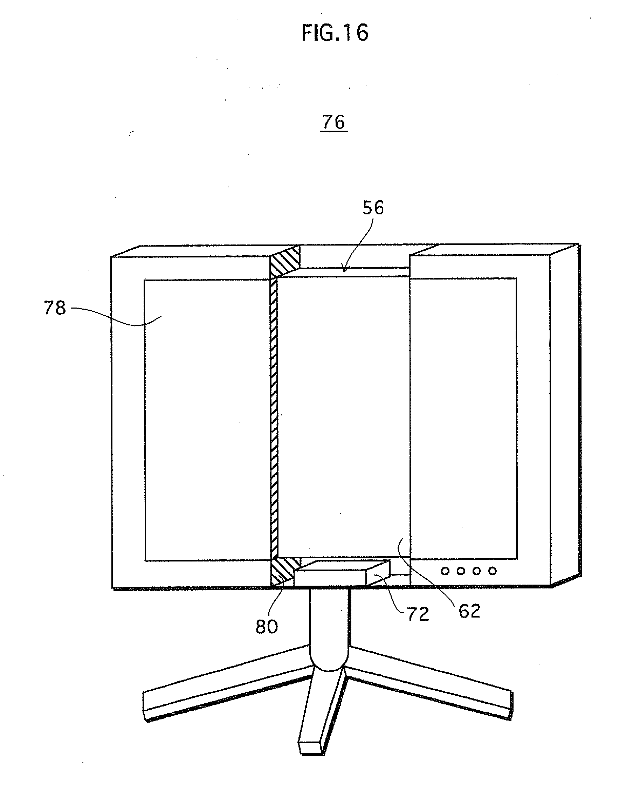

Fig.16 shows a liquid crystal TV 76, where a portion of the front thereof has been broken away. The liquid crystal TV 76 shown in Fig.16 includes a liquid crystal display panel 78, the backlight unit 56, etc.

The liquid crystal display panel 78 is made of a color filter substrate, liquid crystals, a TFT substrate, etc., and is driven by a driving module (not depicted) to form color images based on an image signal received from an external device.

The envelope 62 of the backlight unit 56 is provided on the back face of the liquid crystal display panel 78, and illuminates the liquid crystal display panel 78 from the back face.

The inverter 72 is disposed, for example, inside a housing 80 of the liquid crystal TV 76, but outside of the envelope 62.

Based on embodiments 10 to 14, the following describes EEFLs that, due to innovations in the configuration of members in a vicinity of the ends of the external electrodes, even more effectively suppress discharges between the external electrodes and the glass container.

Embodiment 10

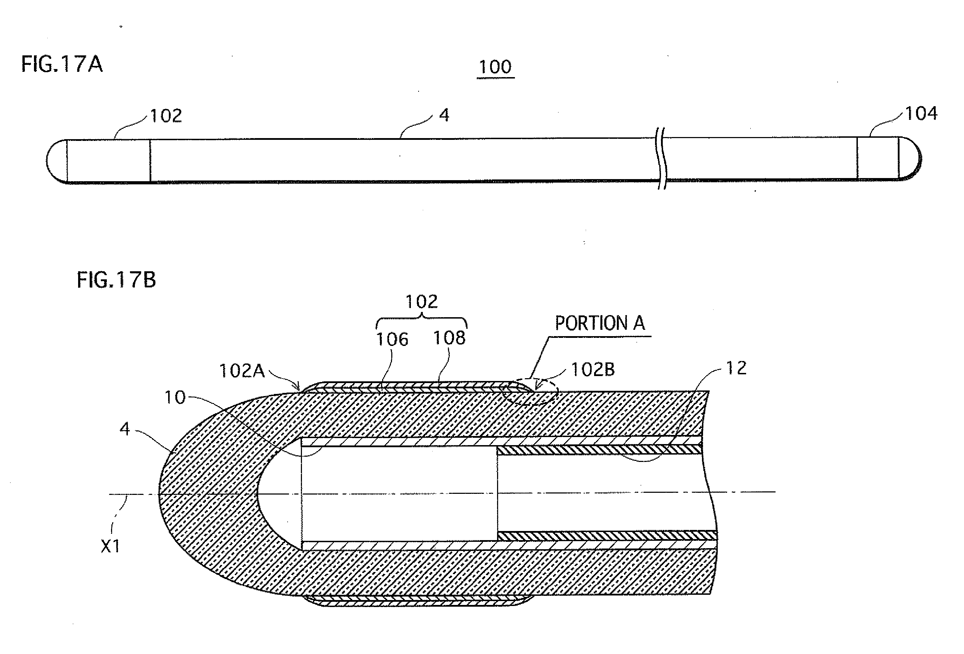

Fig.17A shows the entirety of an external electrode fluorescent lamp 100 (hereinafter, called the "fluorescent lamp 100") pertaining to embodiment 10, and Fig.17B is an enlarged longitudinal cross-sectional view of an end portion of the fluorescent lamp 100.

The fluorescent lamp 100 has basically the same structure as the fluorescent lamp 2 (Fig.1), with the exception of the configuration of portions of the external electrodes in a vicinity of the ends thereof. Specifically, the fluorescent lamp 100 has a structure in which a first external electrode 102 and a second external electrode 104 have been formed on an outer circumference of respective ends of the glass container 4.

Also, similarly to the first external electrode 6 of the fluorescent lamp 2 (Fig.1), the first external electrode 102 has a two-layer structure including a first electrode layer 106 made of a silver (Ag) paste film and a second electrode layer 108 made of a lead (Pb) -free solder film (not depicted in Fig.1). In other words, the first external electrode 102 is a two-layered film adhered to the external face of the glass container 4.

As shown in Fig.17B, the thickness of the first external electrode 102 in a vicinity of the ends thereof in the tube axis X1 direction smoothly and gradually decreases toward ends 102A and 102B. In other words, the ends of the first external electrode 102 do not have corners. If the ends of the external electrodes have corners, discharges readily occur between the surface of the glass container 4 and the peak and vicinity of the corners, which risks causing the production of ozone. In view of this, in the present embodiment, the thickness of the first external electrode 102 in a vicinity of the ends thereof smoothly and gradually decreases towards the ends, thereby effectively suppressing the aforementioned discharges and preventing the production of ozone.

Similarly to the first external electrode 102, the thickness of the second external electrode 104 in a vicinity of the ends thereof in the tube axis X1 direction smoothly and gradually decreases toward the ends 102A and 102B.

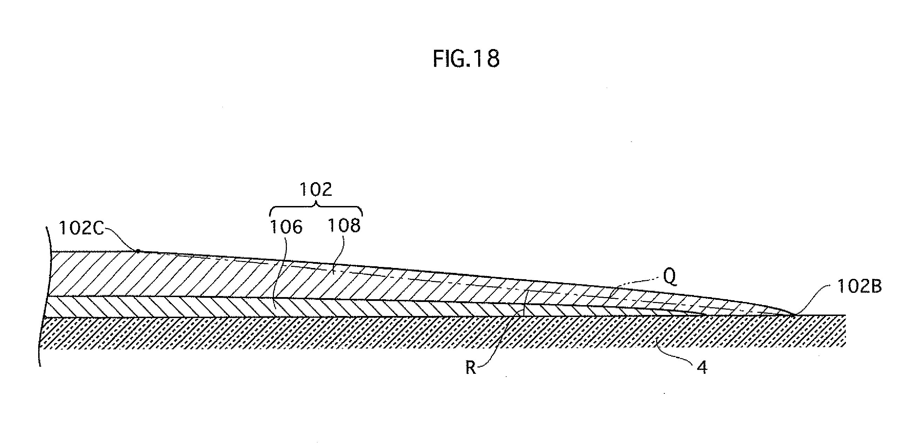

Fig.18 shows details of portion A in Fig.17. In a longitudinal cross-section shown in the detailed view of Fig.18, an angle R is formed between the outer circumferential surface of the glass container 4 and a straight line connecting the end 102B of the first external electrode 102 and a starting point 102C of the reduction in thickness of the first external electrode 102, and such angle R is preferably in the range of 5 to 45 degrees inclusive. As a result, ozone is not readily produced, and the first and second external electrodes 102 and 104 do not readily detach from the glass bulb 102.

Note that in the fluorescent lamp shown in Figs.17A, 17B, and 18, constituent elements that are substantially the same as any of the fluorescent lamp2 of embodiment 1 have been given the same reference notations, and descriptions thereof have been omitted.

Embodiment 11

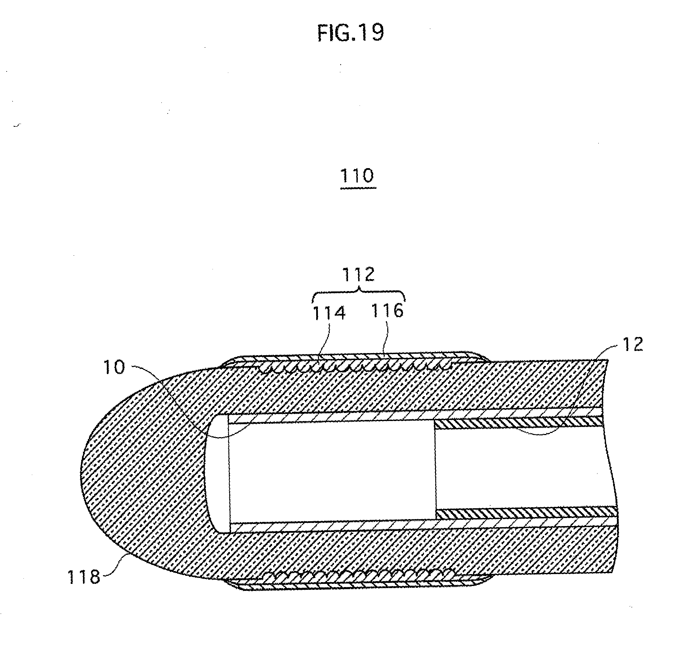

Fig.19 is a longitudinal cross-sectional view showing an end portion on a first external electrode 112 side of an external electrode fluorescent lamp 110 (hereinafter, called the "fluorescent lamp 110") pertaining to embodiment 11. Similarly to the first external electrode 102 (Fig.12B) of embodiment 10, the first external electrode 112 has a two-layered structure including a first electrode layer 114 and a second electrode layer 116.

In the fluorescent lamp 110, the portion of the outer circumferential surface of a glass container 118 where the first and second external electrodes have been formed has been roughened (the portion corresponding to the second external electrode is not depicted). With the exception of the roughening, the fluorescent lamp 110 has the same structure as the fluorescent lamp 100 (Fig.17) of embodiment 10.

The roughening is performed to increase the adhesion of the external electrodes (particularly the first electrode layer 114) to the surface of the glass container 118. Note that the roughening is performed by sandblasting before the formation of the first electrode layer 114. Also, the surface roughness after the roughening processing is approximately 1 to 3 $\mu$m. Although portions of the outer circumferential surface of the glass container 118 are worn away by the sandblasting, the degree of the surface roughness is very small as mentioned above, and the change in the outer diameter is extremely small. The change in the capacitance of the external electrode portions due to the roughening processing is therefore considered to be negligible. As such, the reduction in thickness due to the roughening processing is not taken into account with the average thickness of the dielectric (the thickness of the glass container 118).

Embodiment 12

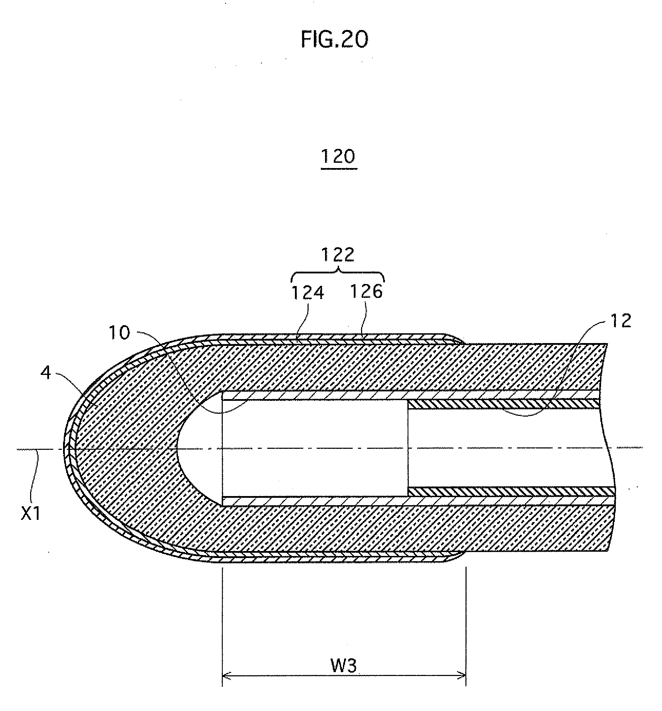

Fig.20 is a longitudinal cross-sectional view showing an end portion on a first external electrode 122 side of an external electrode fluorescent lamp 120 (hereinafter, called the "fluorescent lamp 120") pertaining to embodiment 12.

Similarly to the fluorescent lamp 100 of embodiment 10 (Fig.17), the first external electrode 122 has a two-layered structure including a first electrode layer 124 and a second electrode layer 126. However, the fluorescent lamp 120 differs from the fluorescent lamp 100 (Fig.17) in that the external electrode wraps even around the end of the glass container 4 (so as to cover the end), so as to have a cap (bottomed cylinder) shape. A description of other portions of the structure has been omitted since they are the same as in the fluorescent lamp 100. Note that although not depicted in Fig.20, the second external electrode of the fluorescent lamp 120 has the same cap (bottomed cylinder) shape as the first external electrode 122.

When calculating the capacitance (expression (5)) of the first external electrode 122 portion having the aforementioned shape, the effective area of the first external electrode 122 is the surface area in the range shown by W3 in the tube axis X1 direction. Out of the area where the first external electrode 122 is formed in the tube axis X1 direction, W3 is the range where the thickness of the glass container 4 (half of the difference between the outer and inner diameters) is substantially uniform. This is because discharges only occur in portions of the inner wall (inner circumferential surface) of the glass container 122 corresponding to this range. Note that in expression (7), the length of W3 in the tube axis X direction corresponds to the electrode length L when calculating the capacitance C of the capacitor constituted by the external electrode portions.

Needless to say, in the fluorescent lamp 120 pertaining to embodiment 12, the effective area of the second external electrode (not depicted) is set to be smaller than the effective area of the first external electrode 122.

Embodiment 13

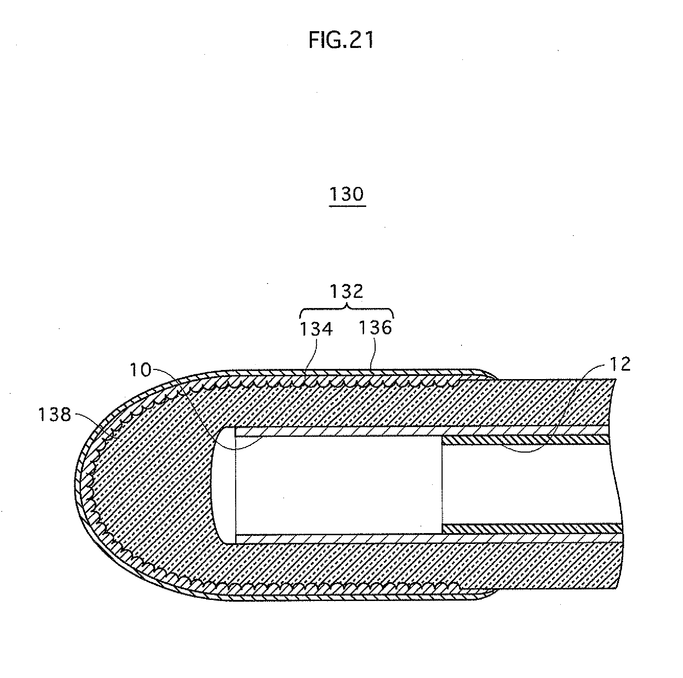

Fig.21 is a longitudinal cross-sectional view showing an end portion on a first external electrode 132 side of an external electrode fluorescent lamp 130 (hereinafter, called the "fluorescent lamp 130") pertaining to embodiment 13.

Similarly to the fluorescent lamp 110 (Fig.19) of embodiment 11, in the fluorescent lamp 130, roughening processing has been performed on the portion of the outer circumferential surface of a glass container 138 where the first external electrode 132, which is made of a first electrode layer 134 and a second electrode layer 136, has been formed. With the exception of the roughening, the fluorescent lamp 130 is the same as the fluorescent lamp 120 (Fig. 20) of embodiment 12.

Embodiment 14

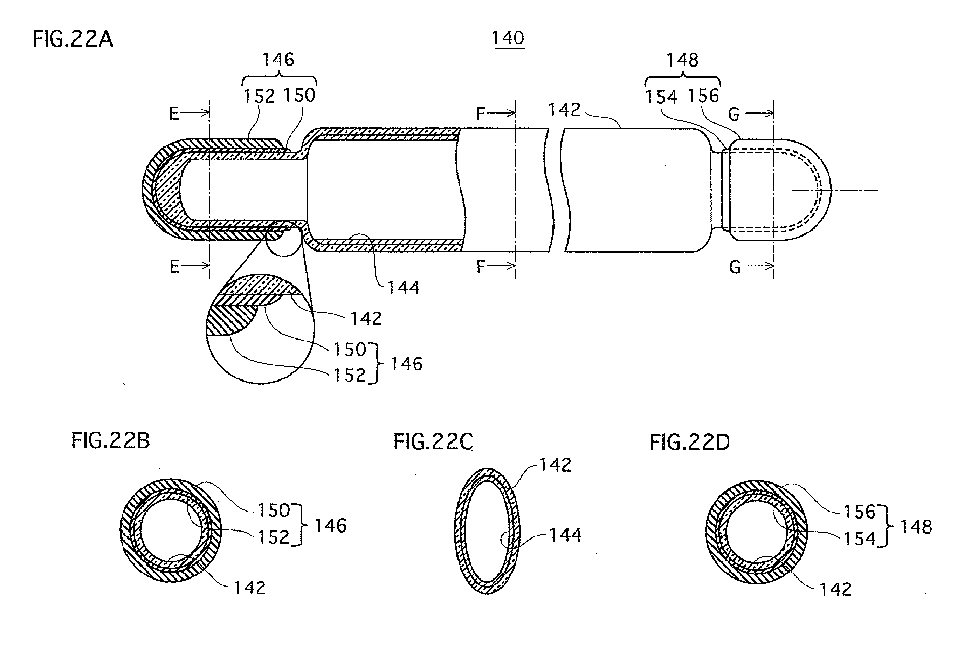

Fig.22A is an overall view of an external electrode fluorescent lamp 140 (hereinafter, called the "fluorescent lamp 140") pertaining to embodiment 14. Figs.22B, 22C and 22D are cross-sectional views taken along lines E-E, F-F and G-G respectively in Fig.22A. Note that Figs.22B, 22C and 22D are local cross-sectional views showing only cross sections, without portions that would appear in the background.

The fluorescent lamp 140 has a glass container 142. The glass container 142 is formed from a cylindrical glass tube whose ends have been hermitically sealed. The glass material of the glass container 142 is the same as in embodiment 1. Longitudinal cross sections of ends portions of the glass container 142 are round in shape, as shown in Figs.22B and 22D (hereinafter, such portions are called the "round portions" of the glass container 142), and the cross-sectional face of the central portion between the round portions is elliptical in shape, as shown in Fig.22C (hereinafter, such portion is called the "flattened portion" of the glass container 142). In other words, the glass container 142 has a continuous structure including the flattened portion and the round portions at the ends of the flattened portion. Note that in addition to being elliptical in shape, the "flattened portion" may have, for example, a substantially flattened shape such as a rectangle having rounded corners like a competition circuit shape (track shape).

A phosphor film 144 has been formed on the inner circumferential surface of the flattened portion of the glass container 142. The phosphor film 144 can be constituted from the same phosphors as in embodiment 1.

A first external electrode 146 has been formed on the outer circumference of one of the round portions of the glass container 142, and a second external electrode 148 has been formed on the outer circumference of the other round portion. The first external electrode 146 has a two-layered structure including a first electrode layer 150 and a second electrode layer 152, and the second external electrode 148 has a two-layered structure including a first electrode layer 154 and a second electrode layer 156. The first electrode layers 150 and 154, and the second electrode layers 152 and 156 can be formed from the same material as in embodiment 1.

Note that although the portions of the glass container on which the external electrodes are provided are round in shape, such portions may be elliptical or substantially flattened. In other words, the glass container may have a longitudinal cross section that is elliptical or substantially flattened.

Although described above based on the embodiments, the present invention is of course not limited to the above embodiments. For example, the following modifications are also included in the present invention.

(1) Although an example of the present invention being applied to an EEFL is described in the above embodiments, the present invention is not limited to a fluorescent lamp. The present invention can also be applied to an external electrode ultraviolet lamp. Specifically, the phosphor film may be removed from the structure of the EEFL pertaining to the above embodiment (the phosphor film is not formed) in order to construct an external electrode ultraviolet lamp. An ultraviolet lamp can be used for irradiating an object in order to, for example, sterilize the object.

(2) Although the glass container has a straight tube shape in the embodiments, the shape of the glass container is not limited to this. The glass container can have an L-shape, a U-shape, or other known shape.

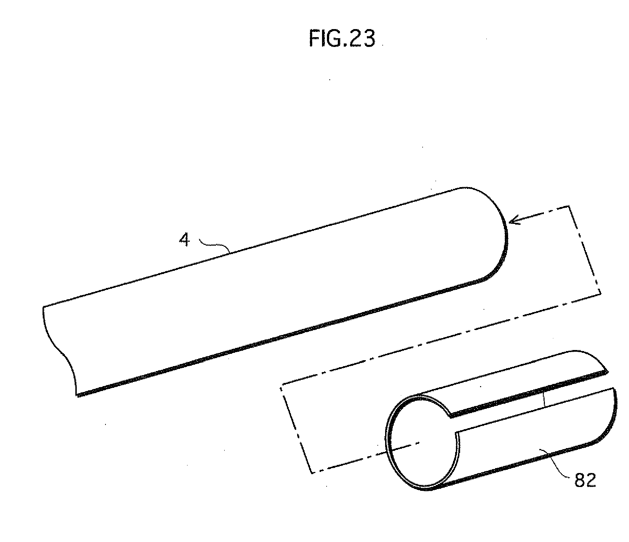

(3) Although constituted from a metallic tape that has a two-layered structure including a silver (Ag) paste film and a lead (Pb)-free solder film in the embodiments, the structure of the external electrodes is not limited to this. For example, as shown in Fig.23, an external electrode 82 may be formed by curling a metal plate into a round shape that conforms to the outer form of the glass container 4, and fitting the rounded metal plate onto an end portion of the glass container 4. Such an external electrode is more resistant to detaching due to fitting into the backlight unit etc. than the external electrodes of the embodiments.

Also, the external electrodes may be constituted from only one layer. In this case, the solder material forming the external electrodes can be a material that includes tin, a tin-indium alloy, or a tin-bismuth alloy as a main component. Also, at least one of antimony, zinc and aluminum is preferably included in the solder material as an additive from the standpoint of fixability to the glass container. Furthermore, antimony or zinc is preferably included in the solder material as an additive from the standpoint of wettability with respect to the surface of the glass container.

(4) In the above embodiments, C1 is set to be greater than C2 by giving the external electrodes different effective areas or giving the first and second dielectric parts different average thicknesses (d1 and d1). However, the present invention is not limited to this. The first and second dielectric parts may be given different relative permittivities. In other words, C1 may be set to be greater than C2 by setting the relative permittivity of the first dielectric part higher than the relative permittivity of the second dielectric part.

Specifically, for example, a first dielectric film made of a dielectric paste (whose relative permittivity is 8 to 12) may be provided between the first external electrode and the outer circumference of the glass container, and a second dielectric film made of silica glass (whose relative permittivity is 3) may be provided between the second external electrode and the outer circumference of the glass container. Instead of the above positions, the first and second dielectric films may be formed on the inner circumference of the glass container.

(5) Similarly to the EEFLs of embodiments 10 to 14, the EEFLs of embodiments 1 to 8 may have a structure in which the thickness of the external electrodes in a vicinity of the ends thereof smoothly and gradually decreases toward the ends.

Similarly to the EEFLs of embodiments 11 and 13 (Fig.19 and Fig.21), in the EEFLs of embodiments 1 to 8, roughening processing may be performed on portions of the outer circumferential surfaces of the glass container where the external electrodes are formed.

Similarly to the EEFLs of embodiments 12, 13 and 14 (Figs.20, 21 and 22), in the EEFLs of embodiments 1 to 8, the external electrodes may have an overall cap shape (bottomed cylinder) so as to surround even the ends of the glass container (completely cover the ends).

(6) Although various materials can be used for the glass container as described above, the in-dark starting characteristics can be improved if the material of the glass container is soda glass, lead glass or lead-free glass. Specifically, such types of glass include a large amount of alkali metal oxides such as most notably sodium oxide ($Na_2o$), and in the exemplary case of sodium oxide, the sodium (Na) component elutes into the surface of the glass container as time passes. Since sodium has a low electronegativity, the sodium that elutes into the inner ends of the glass container (not provided with a protective film) is though to contribute to the improvement in in-dark starting characteristics.

In particular, in embodiments 12, 13 and 14 (Figs.20, 21 and 22) in which the external electrodes have been formed so as to completely cover the outer circumferential surface of the ends of the glass container, the material of the glass container preferably contains 3 [mol%] to 20 [mol%] of alkali metal oxides.

For example, in a case in which the alkali metal oxide is sodium oxide, it is preferable for 5 [mol%] to 20 [mol%] of sodium oxide to be included in the material of the glass container. If the alkali metal oxide content is lower than 5 [mol%], there is an increased probability that the in-dark starting time will exceed 1 [sec] (in other words, if the alkali metal oxide content is 5 [mol%] or greater, there is an increased probability that the in-dark starting time will be within 1 [sec]). Also, an alkali metal oxide content of over 20 [mol%] leads to whitening or darkening (browning) of the glass container over prolonged use, thereby causing a reduction in brightness, and also reduces the strength of the glass container.

Also, it is preferable to use lead-free glass in consideration of the protection of the environment. However, even with lead-free glass, there are cases in which lead is included as an impurity in the manufacturing process. Lead-free glass is therefore defined as glass that contains lead at an impurity level, which is 0.1 [wt%] or less.

Also, the glass container can be caused to absorb 254 [nm] or 313 [nm] ultraviolet radiation by doping the glass with a predetermined amount of a transition metal oxide, where the predetermined amount depends on the transition metal oxide used. Specifically, in the case of titanium oxide ($TiO_2$), doping at a composition rate of 0.05 [mol%] or less causes the glass container to absorb 254 [nm] ultraviolet radiation, and doping at a composition rate of 2 [mol%] or more causes the glass container to absorb 313 [nm] ultraviolet radiation. However, since the glass devitrifies if the composition rate of the titanium oxide is 5.0 [mol%] or more, doping is preferably performed at a composition rate of 0.05 [mol%] to 5.0 [mol%].

Also, in the case of cerium oxide ($CeO_2$), doping at a composition rate of 0.05 [mol%] or more causes the glass container to absorb 254 [nm] ultraviolet radiation. However, since the glass becomes colored if more than 0.5 [mol%] of cerium oxide is doped, cerium oxide is preferably doped at a composition rate of 0.05 [mol%] to 0.5 [mol%]. Note that since doping tin oxide (SnO) in addition to cerium oxide suppresses the coloration of the glass, cerium oxide can be doped at a composition rate of up to 5.0 [mol%]. In this case, the glass can be caused to absorb 313 [nm] ultraviolet radiation by doping cerium oxide at a composition rate of 0.5 [mol%] or more. However, even in this case, the glass devitrifies if cerium oxide is doped at a composition rate of more than 5.0 [mol%].

Also, in the case of zinc oxide (ZnO), doping at a composition rate of 2.0 [mol%] or more causes the glass container to absorb 254 [nm] ultraviolet radiation. However, since there is a risk of the glass devitrifying if more than 20 [mol%] of zinc oxide is doped, zinc oxide is preferably doped at a composition rate of 2.0 [mol%] to 20 [mol%].

Also, in the case of iron oxide ($Fe_2O_3$), doping at a composition rate of 0.01 [mol%] or more causes the glass container to absorb 254 [nm] ultraviolet radiation. However, since the glass becomes colored if more than 2.0 [mol%] of iron oxide is doped, iron oxide is preferably doped at a composition rate of 0.01 [mol%] to 2.0 [mol%].

It is preferable for the infrared transmissivity coefficient indicating the amount of water contained in the glass to be adjusted so as to fall in the range of 0.3 to 1.2, or particularly 0.4 to 0.8. An infrared transmissivity coefficient of 1.2 or less makes it easier to obtain a low dielectric tangent that is applicable to high voltage lamps in external electrode fluorescent lamps (EEFLs) and long cold cathode fluorescent lamps. An infrared transmissivity coefficient of 0.8 or less further reduces the dielectric tangent, which is further advantageous in high voltage lamps.

Note that the infrared transmissivity coefficient (X) can be expressed in the following expression.

$$X = (\log(a/b))/t$$

a: transmissivity [%] at local minimum point in 3840 [cm-1] vicinity
b: transmissivity [%] at local minimum point in 3564 [cm-1] vicinity
t: thickness of glass

(7) The phosphors constituting the phosphor film are not limited to the ones previously described. For example, the phosphor film may be constituted from phosphors that absorb 313 [nm] ultraviolet radiation, such as the red phosphor ($YVO_4$:$Eu^{3+}$), the green phosphor ($BaMg_2Al_{16}O_{27}$:$Eu^{2+}$,$Mn^{2+}$, and the blue phosphor ($BaMg_2Al_{16}O_{27}$:$Eu^{2+}$). If 50 [wt%] or more of the total weight of phosphors is made of the above phosphors that absorb 313 [nm] ultraviolet radiation, the leakage of 313 [nm] ultraviolet radiation out of the lamp can be almost entirely prevented, and the use of such a lamp in a backlight unit (Fig.12) prevents the degradation of resin etc. used in the light-focusing plate 64 (66, 68, 70) due to ultraviolet radiation. In particular, when polycarbonate (PC) resin is used in the diffusion plate 66 (Fig.12), there is more degradation and discoloration due to 313 [nm] ultraviolet radiation than when acrylic resin is used. Therefore, when phosphors that absorb 313 [nm] ultraviolet radiation are included in the phosphor layer, the properties of the backlight unit can be maintained long-term even if the backlight unit uses a PC resin diffusion plate.

Also, a phosphor absorbing 313 [nm] ultraviolet radiation is defined as a phosphor in which an intensity of an excitation wavelength spectrum of 313 nm is 80% or more when an intensity of an excitation wavelength spectrum around 254 [nm] is 100% (the excitation wavelength spectrum is a type of spectrum that plots an excitation wavelength and a light intensity when a phosphor is excited over a range of wavelengths). In other words, a phosphor absorbing 313 [nm] ultraviolet radiation is a phosphor capable of absorbing 313 [nm] ultraviolet radiation and converting it to visible light.

The following are examples of phosphors that absorb 313 [nm] ultraviolet radiation

(i) Blue phosphor
$BaMg_2Al_{16}O_{27}$:$Eu^{2+}$, $Sr_{10}(PO_4)_6Cl_2$:$Eu^{2+}$,
$(Sr, Ca, Ba)_{10}(PO_4)_6Cl_2$:$Eu^{2+}$,
$Ba_{1-x-y}Sr_xEu_yMg_{1-z}Mn_zAl_{10}O_{17}$ (provided that x, y, and z are numbers that satisfy the conditions $0 \leq x \leq 0.4$, $0.07 \leq y \leq 0.25$, and $0.1 \leq z \leq 0.6$, and it is particularly preferable for z to satisfy the condition $0.4 \leq z \leq 0.5$)
(ii) Green phosphor
$BaMg_2Al_{16}O_{27}$: $Eu^{2+}$, $Mn^{2+}$, $MgGa_2O_4$: $Mn^{2+}$,
$CeMgAl_{11}O_{19}$:$Tb^{3+}$
(iii) Red phosphor
$YVO_4$:$Eu^{3+}$, $YVO_4$:$Dy^{3+}$ (emits green and red light)

Note that a mixture of phosphors of different compounds may be used for one color. One example is to use only BAM for blue, LAP (does not absorb 313 [nm] ultraviolet radiation) and BAM:$Mn^{2+}$ for green, and YOX (does not absorb 313 [nm] ultraviolet radiation) and $YVO_4$:$Eu^{3+}$ for red. In such a case, the leakage of ultraviolet radiation from the glass container can be reliably prevented by adjusting the phosphors such that 50% or more of the total weight proportion is made of the phosphors absorbing 313 [nm] ultraviolet radiation.

**INDUSTRIAL APPLICABILITY**

An external electrode lamp of the present invention can be favorably applied as a light source in a backlight unit etc. that is used in an environment having scarce external light.

**Claims**

1. An external electrode lamp comprising:

   a discharge container having a discharge medium enclosed therein; and
   a first external electrode and a second external electrode that have been provided external to the discharge container, wherein
   a capacitance of a first capacitor is greater than a capacitance of a second capacitor, the first capacitor being constituted from the first external electrode and a first dielectric part that includes a portion of the discharge container between the first external electrode and the discharge medium, and the second capacitor being constituted from the second external electrode and a second dielectric part that includes a portion of the discharge container between the second external electrode and the discharge medium.

2. The external electrode lamp of claim 1, wherein
the capacitance of the first capacitor is greater than the capacitance of the second capacitor due to a surface area of a portion of the first external electrode that faces the discharge medium being greater than a surface area of a portion of the second external electrode that faces the discharge medium.

3. The external electrode lamp of claim 2, wherein
the discharge container is tube-shaped,
the first external electrode and the second external electrode have been provided so as to surround an outer circumference of the discharge container at locations that differ with respect to a tube axis direction of the discharge container, and
a length of the first external electrode in the tube axis direction is greater than a length of the second external electrode in the tube axis direction.

4. The external electrode lamp of claim 2, wherein
the discharge container is tube-shaped,
the first external electrode and the second external electrode have been provided so as to surround an outer circumference of the discharge container at locations that differ with respect to a tube axis direction of the discharge container, and
a circumferential length of a portion of the discharge container on which the first external electrode has been provided is greater than a circumferential length of a portion of the discharge container on which the second external electrode has been provided.

5. The external electrode lamp of claim 1, wherein
the capacitance of the first capacitor is greater than the capacitance of the second capacitor due to a thickness of the second dielectric part being relatively greater than a thickness of the first dielectric part.

6. The external electrode lamp of claim 5, wherein
a thickness of a portion of the discharge container on which the first external electrode has been provided is relatively less than a thickness of a portion of the discharge container on which the second external electrode has been provided.

7. The external electrode lamp of claim 5, wherein
a protective film has been provided on an area of an inner side of the discharge container, the area at least opposing the first external electrode and the second external electrode, and
a thickness of a portion of the protective film that opposes the second external electrode and constitutes a portion of the second dielectric part is greater than a thickness of a portion of the protective film that opposes the first external electrode and constitutes a portion of the first dielectric part.

8. The external electrode lamp of claim 5, wherein
the second dielectric part includes a dielectric film, and the thickness of the second dielectric part is greater than the thickness of the first dielectric part by at least a film thickness of the dielectric film.

9. The external electrode lamp of claim 8, wherein
the dielectric film includes a portion of a phosphor film provided on an inner side of the discharge container.

10. The external electrode lamp of claim 8, wherein
the dielectric film has been provided on an inner side of the discharge container.

11. The external electrode lamp of claim 8, wherein
the dielectric film has been provided between the second external electrode and an outer surface of the discharge container.

12. The external electrode lamp of claim 1, wherein
the capacitance of the first capacitor is greater than the capacitance of the second capacitor due to a relative permittivity of the first dielectric part being greater than a relative permittivity of the second dielectric part.

13. The external electrode lamp of claim 1, wherein

a percentage value obtained by dividing the capacitance of the first capacitor by the capacitance of the second capacitor is in a range of 43% to 95% inclusive.

14. The external electrode lamp of claim 1, wherein
a percentage value obtained by dividing the capacitance of the first capacitor by the capacitance of the second capacitor is in a range of 43% to 77% inclusive.

15. The external electrode lamp of claim 1, wherein
the first external electrode and the second external electrode are each a film that has been adhered to an outer face of the discharge container, and
for each of the first external electrode and the second external electrode, a thickness in a vicinity of an end thereof smoothly and gradually decreases toward the end.

16. The external electrode lamp of claim 15, wherein
for each of the first external electrode and the second external electrode, a degree of an angle formed between the outer face of the discharge container and a straight line connecting the end of the external electrode and a starting point of the decrease in thickness of the external electrode is in a range of 5 degrees to 45 degrees inclusive.

17. The external electrode lamp of claim 1, wherein
the first external electrode and the second external electrode are each a film that has been adhered to an outer face of the discharge container, and
roughening processing has been performed on at least a portion of the outer face of the discharge container, said portion being in an area of the adhering.

18. The external electrode lamp of claim 1, wherein
the discharge container is made of a glass material that includes an alkali metal at a rate of 3 mol% to 20 mol% inclusive.

19. A backlight unit comprising:

the external electrode lamp of claim 1; and
a lighting circuit unit operable to apply an alternating voltage to the first external electrode and the second external electrode such that in at least a half cycle of the alternative voltage, a potential of the first external electrode is higher than a potential of the second external electrode.

20. A liquid crystal display apparatus comprising:

a liquid crystal display panel; and
the backlight unit of claim 19, the backlight unit including an envelope that houses a plurality of the external electrode lamps, and the envelope having been provided on a back face of the liquid crystal display panel.

**Amended claims under Art. 19.1 PCT**

1. (Amended) An external electrode lamp comprising:

a discharge container having at least mercury enclosed therein as a discharge medium; and
a first external electrode and a second external electrode that have been provided external to the discharge container, wherein
a capacitance of a first capacitor is greater than a capacitance of a second capacitor, the first capacitor being constituted from the first external electrode and a first dielectric part that includes a portion of the discharge container between the first external electrode and the discharge medium, and the second capacitor being constituted from the second external electrode and a second dielectric part that includes a portion of the discharge container between the second external electrode and the discharge medium.

2. The external electrode lamp of claim 1, wherein
the capacitance of the first capacitor is greater than the capacitance of the second capacitor due to a surface area of a portion of the first external electrode that faces the discharge medium being greater than a surface area of a portion of the second external electrode that faces the discharge medium.

**3.** The external electrode lamp of claim 2, wherein the discharge container is tube-shaped,
the first external electrode and the second external electrode have been provided so as to surround an outer circumference of the discharge container at locations that differ with respect to a tube axis direction of the discharge container, and
a length of the first external electrode in the tube axis direction is greater than a length of the second external electrode in the tube axis direction.

**4.** The external electrode lamp of claim 2, wherein
the discharge container is tube-shaped,
the first external electrode and the second external electrode have been provided so as to surround an outer circumference of the discharge container at locations that differ with respect to a tube axis direction of the discharge container, and
a circumferential length of a portion of the discharge container on which the first external electrode has been provided is greater than a circumferential length of a portion of the discharge container on which the second external electrode has been provided.

**5.** The external electrode lamp of claim 1, wherein
the capacitance of the first capacitor is greater than the capacitance of the second capacitor due to a thickness of the second dielectric part being relatively greater than a thickness of the first dielectric part.

**6.** The external electrode lamp of claim 5, wherein
a thickness of a portion of the discharge container on which the first external electrode has been provided is relatively less than a thickness of a portion of the discharge container on which the second external electrode has been provided.

**7.** The external electrode lamp of claim 5, wherein
a protective film has been provided on an area of an inner side of the discharge container, the area at least opposing the first external electrode and the second external electrode, and
a thickness of a portion of the protective film that opposes the second external electrode and constitutes a portion of the second dielectric part is greater than a thickness of a portion of the protective film that opposes the first external electrode and constitutes a portion of the first dielectric part.

**8.** The external electrode lamp of claim 5, wherein
the second dielectric part includes a dielectric film, and the thickness of the second dielectric part is greater than the thickness of the first dielectric part by at least a film thickness of the dielectric film.

**9.** The external electrode lamp of claim 8, wherein
the dielectric film includes a portion of a phosphor film provided on an inner side of the discharge container.

**10.** The external electrode lamp of claim 8, wherein
the dielectric film has been provided on an inner side of the discharge container.

**11.** The external electrode lamp of claim 8, wherein
the dielectric film has been provided between the second external electrode and an outer surface of the discharge container.

**12.** The external electrode lamp of claim 1, wherein
the capacitance of the first capacitor is greater than the capacitance of the second capacitor due to a relative permittivity of the first dielectric part being greater than a relative permittivity of the second dielectric part.

**13.** The external electrode lamp of claim 1, wherein
a percentage value obtained by dividing the capacitance of the first capacitor by the capacitance of the second capacitor is in a range of 43% to 95% inclusive.

**14.** The external electrode lamp of claim 1, wherein
a percentage value obtained by dividing the capacitance of the first capacitor by the capacitance of the second capacitor is in a range of 43% to 77% inclusive.

**15.** The external electrode lamp of claim 1, wherein
the first external electrode and the second external electrode are each a film that has been adhered to an outer face of the discharge container, and
for each of the first external electrode and the second external electrode, a thickness in a vicinity of an end thereof smoothly and gradually decreases toward the end.

**16.** The external electrode lamp of claim 15, wherein
for each of the first external electrode and the second external electrode, a degree of an angle formed between the outer face of the discharge container and a straight line connecting the end of the external electrode and a starting point of the decrease in thickness of the external electrode is in a range of 5 degrees to 45 degrees inclusive.

**17.** The external electrode lamp of claim 1, wherein
the first external electrode and the second external electrode are each a film that has been adhered to an outer face of the discharge container, and
roughening processing has been performed on at least a portion of the outer face of the discharge container, said portion being in an area of the adhering.

**18.** The external electrode lamp of claim 1, wherein
the discharge container is made of a glass material that includes an alkali metal at a rate of 3 mol% to 20 mol% inclusive.

**19.** A backlight unit comprising:

the external electrode lamp of claim 1; and
a lighting circuit unit operable to apply an alternating voltage to the first external electrode and the second external electrode such that in at least a half cycle of the alternative voltage, a potential of the first external electrode is higher than a potential of the second external electrode.

**20.** A liquid crystal display apparatus comprising:

a liquid crystal display panel; and
the backlight unit of claim 19, the backlight unit including an envelope that houses a plurality of the external electrode lamps, and the envelope having been provided on a back face of the liquid crystal display panel.

FIG.1

EP 1 933 367 A1

# FIG.2A

# FIG.2B

FIG.3

FIG.4A

| TEST LAMP | C2/C1 [%] | STARTING VOLTAGE [V] | STARTING VOLTAGE RELATIVE VALUE [%] | LUMINANCE UNIFORMITY [%] |
|---|---|---|---|---|
| A | 100 | 2850 | 100 | 94 |
| B | 71 | 2460 | 86 | 76 |
| C | 50 | 1770 | 62 | 62 |
| D | 20 | 1430 | 50 | 26 |

FIG.4B

FIG.4C

FIG.5

FIG.6

28

FIG.7

EP 1 933 367 A1

FIG.8

40

FIG.9

FIG.10

EP 1 933 367 A1

# FIG.11

52

FIG.12

FIG.13

EP 1 933 367 A1

FIG.14

EP 1 933 367 A1

FIG.15

FIG.16

<u>76</u>

FIG.17A

100

102    4    104

FIG.17B

102

106  108    PORTION A

102A    102B    12

10

4

X1

EP 1 933 367 A1

FIG.18

EP 1 933 367 A1

FIG.19

110

112

114  116

10

12

118

# FIG.20

120

FIG.21

FIG.22A

146

152 150

148

154 156

140

E

F 142 G

E

142

150
152

146

F

144

G

144

1524

FIG.22B

150
152

146

142

FIG.22C

142

144

FIG.22D

156
154

148

142

FIG.23

4

82

## INTERNATIONAL SEARCH REPORT

| International application No. |
| --- |
| PCT/JP2006/319064 |

A.  CLASSIFICATION OF SUBJECT MATTER
*H01J65/00*(2006.01)i, *H05B41/24*(2006.01)i

According to International Patent Classification (IPC) or to both national classification and IPC

B.  FIELDS SEARCHED

Minimum documentation searched (classification system followed by classification symbols)
H01J65/00-65/08

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2003-331793 A  (Ushio Inc.), 21 November, 2003 (21.11.03), Detail explanation of the invention; Par. Nos. [0001], [0015]      to [0022]; Figs. 1 to 3 (Family: none) | 1-3,13,14 |

☐  Further documents are listed in the continuation of Box C.          ☐  See patent family annex.

| | |
| --- | --- |
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>13 December, 2006 (13.12.06) | Date of mailing of the international search report<br>26 December, 2006 (26.12.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| International application No. |
| --- |
| PCT/JP2006/319064 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
    The technical matter common to the inventions of claims 1-20 is the one stated in claim 1.  However, the search has revealed that the common technical matter is not novel since it is disclosed in document 1.

    Document 1: JP 2003-331793 A (Ushio Inc.), 21 November, 2003 (21.11.03), Detailed Description of the Invention, paragraph 0001, 0015 to 0022, Figures 1 to 3

    Consequently, since the common technical matter makes no contribution over the prior art,      (Continued to the extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-3, 13, 14

**Remark on Protest**
the
☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2006/319064 |

Continuation of Box No.III of continuation of first sheet(2)

it cannot be a special technical feature within the meaning of PCT Rule 13.2, second sentence. Therefore, there is no special technical feature common to all the inventions of claims 1-20.

The international search has also revealed that technical matter common to the inventions of claims 2-4 (that is, the technical matter stated in claim 2) is not novel since it is also disclosed in document 1. Consequently, since the common matter makes no contribution over the prior art, it cannot be a special technical feature within the meaning of PCT Rule 13.2, second sentence. Therefore, there is no special technical feature common to all the inventions of claims 2-4.

The number of inventions of claims 1-20 is eight as listed below. The inventions of claims 13, 14 have been judged not to involve any inventive step because of the disclosure by document 1. Therefore, the inventions are categorized into the same group as claim 1.

```
Invention 1: claims 1-3, 13, 14
Invention 2: claim 4
Invention 3: claims 5-11
Invention 4: claim 12
Invention 5: claims 15, 16
Invention 6: claim 17
Invention 7: claim 18
Invention 8: claims 19, 20
```

Form PCT/ISA/210 (extra sheet) (April 2005)

**EP 1 933 367 A1**

**REFERENCES CITED IN THE DESCRIPTION**

**Patent documents cited in the description**

- JP S61126559 B